# EUROPEAN PATENT SPECIFICATION

(11) **EP 3 042 554 B1**
(45) Date of publication and mention of the grant of the patent: **08.11.2017**
(21) Application number: 15198519.9
(22) Date of filing: 08.12.2015
(51) Int. Cl.: A01B 69/00

(54) **AGRICULTURAL WORKING VEHICLE**
LANDWIRTSCHAFTLICHES ARBEITSFAHRZEUG
VÉHICULE DE TRAVAIL AGRICOLE

(30) Priority: 10.12.2014 JP 2014250321
(43) Date of publication of application: 13.07.2016
(73) Proprietor: Iseki & Co., Ltd., Matsuyama-shi, Ehime 799-2692 (JP)
(72) Inventor: KAJINO, Yutaka, Iyo-gun, Ehime 791-2193 (JP); ISEKI, Hideo, Iyo-gun, Ehime 791-2193 (JP); FUSE, Takanobu, Osaka-shi, Osaka 546-0041 (JP)
(74) Representative: Spengler, Robert

(56) References cited:
- JP-A- H10 234 204
- JP-A- 2008 067 617

## Description

### BACKGROUND OF THE INVENTION

### Field of the Invention

This invention relates to an agricultural working vehicle such as a tractor, a rice-transplanter, an agricultural field spraying device or the like.

In running of a tractor for agriculture in a farm field, for the purpose of preventing generation of unfinished-ground-working zones and repeated-ground-working zones and reducing a running burden of a worker, publicly known is a configuration which relates to a traveling-assist device comprising a GPS device for making the vehicle-body travel along the estimated traveling-route by manual piloting (for example, refer to Japanese Patent Application Publication No. Hei 10-234204). Moreover, there is a configuration which creates based on position information which is gauged by a GPS device a reference-route, a so-called teaching-route, and computes based on this route an adjacent target-route to perform autonomous traveling of an agricultural working vehicle (for example, refer to Japanese Patent Publication No. 4948098).

### SUMMARY OF THE INVENTION

Now, in the above-mentioned respective patent documents, formation of the teaching-route which becomes the reference of a target-route is as follows. In Japanese Patent Application Publication No. Hei 10-234204, as the estimated traveling-routes within a farm field F of a rectangular shape, plural working stages are set which are along the farm field longer direction and besides adjacently line up at setting intervals in the shorter direction, but there is no disclosure regarding a specific setting method of the traveling-starting position and traveling-ending position of the estimated traveling-route which becomes the reference of these working stages. Moreover, in Japanese Patent Publication No. 4948098, the configuration is given in a manner such that for the starting point and ending point of the teaching-route, by pressing down the teaching SW it is set as the starting point, and that the teaching is allowed to end if pressing down is carried out once again, and the configuration is such that the route is decided by the vehicle-body position information of each.

However, in an actual farm field, the setting of the teaching starting point and ending point has to be set according to circumstances in consideration of the working kind thereof, the farm field condition and the like. The present invention, in view of the above-mentioned, makes, on the occasion of setting of a teaching-route or alternatively a reference-line, formation of the reference-route be more fittingly and besides promptly performed.

The 1^{st} aspect of the present invention is a route setting device (92) of an agricultural working vehicle (1), comprising:
a reference-route setting unit (100a) which sets a straight-line reference-route (MS) of a machine-body of the agricultural working vehicle (1);
a target-route setting unit (100b) which sets a target-route (MLn, MRn...) parallel to the reference-route (MS); and
a displaying part (102) which displays the reference-route (MS) and the target-route (MLn, MRn...),
**characterized in that**
the route setting device (92) comprises a reference-measurement starting switch unit (103e) which accepts a setting operation of reference-measurement starting, and a reference-measurement ending switch unit (103f) which accepts a setting operation of reference-measurement ending,
the reference-route setting unit (100a) has a reference-measurement starting setting unit (100a1) which sets a starting point (A, An) of the reference-route (MS) based on the setting operation of the reference-measurement starting switch unit (103e), and a reference-measurement ending setting unit (100a2) which sets an ending point (B, Bn...) of the reference-route (MS) based on the setting operation of the reference-measurement ending switch unit (103f), and
the starting point (An) is renewed with every setting operation of the reference-measurement starting switch unit (103e).

The 2^{nd} aspect of the present invention is the route setting device (92) of the agricultural working vehicle (1) according to the 1^{st} aspect of the present invention, wherein
location-point information of the machine-body by a GPS is detected by a location-point information detecting unit (90),
the reference-measurement starting setting unit (100a1) sets the starting point (A, An) based on the location-point information which has been detected, and
the reference-measurement ending setting unit (100a2) sets the ending point (B, Bn...) based on the location-point information which has been detected.

The 3^{rd} aspect of the present invention is the route setting device (92) of the agricultural working vehicle (1) according to the 1^{st} aspect of the present invention, wherein
the ending point (Bn) is renewed with every setting operation of the reference-measurement ending switch unit (103f).

The 4^{th} aspect of the present invention is the route setting device (92) of the agricultural working vehicle (1) according to the 1^{st} aspect of the present invention, comprising an assist starting switch unit (103a) which makes working data inputting of the machine-body start, wherein
the assist starting switch unit (103a) is also utilized as the reference-measurement starting switch unit (103e).

The 5^{th} aspect of the present invention is the route setting device (92) of the agricultural working vehicle (1) according to the 1^{st} aspect of the present invention, wherein
on condition that there is not a setting operation of the reference-measurement ending switch unit (103f) thereafter based on a predetermined criterion, a turnaround point is set as the ending point (Bt) based on a turnaround judgement of the machine-body.

The 6^{th} aspect of the present invention is the route setting device (92) of the agricultural working vehicle (1) according to the 1^{st} aspect of the present invention, wherein
a detour starting point is provisionally set as the ending point (Bk),
when it is judged based on a predetermined criterion that there is a setting operation of the reference-measurement ending switch unit (103f) thereafter, the ending point (Bk) which has been provisionally set is cancelled, and the ending point (Bc) is adopted corresponding to the setting operation, and
when it is judged based on the predetermined criterion that there is not a setting operation of the reference-measurement ending switch unit (103f) thereafter, the ending point (Bk) which has been provisionally set is adopted.

The 7^{th} aspect of the present invention is an agricultural working vehicle (1), comprising the route setting device (92) of the agricultural working vehicle (1) according to the 1^{st} aspect of the present invention.

By the 1^{st} or 2^{nd} aspect of the present invention, any one of the starting points A, An of the reference-route in the straight-line mode can be arbitrarily set by an operation of the "reference-measurement starting" switch unit 103e, by the 3^{rd} aspect of the present invention, also in the ending points B, Bₙ setting can be arbitrarily carried out by an operation of the "reference-measurement ending" switch unit 103f, and a traveling-assist state could be given from the middle of the farm field working. Because of this, even with a deformed farm field, by operations of the "reference-measurement starting" switch unit 103e and the "reference-measurement ending" switch unit 103f the reference-route MS can be properly set, and afterward the plural target-routes MLn, MRn... can be set corresponding to the working width W.

Through the 4^{th} aspect of the present invention, in addition to the effects of the 1^{st} aspect of the present invention, since the "assist starting" switch unit 103a is made to possess the function of the "reference-measurement starting" switch unit 103e, the assist is allowed to start by an operation of the "assist starting" switch unit 103a, that is to say, the working data inputting of the machine-body is started and, because the starting point A can be set at the same time also with the "assist starting", point rematching by forgetting can be lessened.

Through the 5^{th} aspect of the present invention, in addition to the effects of the 1^{st} aspect of the present invention, in a case where a turnaround judgement has been performed, since the turnaround point is looked on as the ending point Bk, there is no fear of forgetting the reference-route MS setting.

Through the 6^{th} aspect of the present invention, in addition to the effects of the 1^{st} aspect of the present invention, the ending point Bc could be set with a detour around a vegetating fruit tree or the like, which is convenient.

By the 7^{th} aspect of the present invention, any one of the starting points A, An of the reference-route in the straight-line mode can be arbitrarily set by an operation of the "reference-measurement starting" switch unit 103e.

### BRIEF DESCRIPTION OF THE DRAWINGS

FIG. 1 is a side view of the tractor of the present practical example;
FIG. 2 is a motive force moving-transference mechanism diagram of the tractor;
FIG. 3 is a diagram which shows a usage facet of information communication used in the tractor;
FIG. 4 is a controller configuration diagram of the tractor;
FIG. 5(A) is a master screen of the portable terminal,
FIG. 5(B) is a tractor selecting screen, and
FIG. 5(C) is a menu displaying screen;
FIG. 6 is a flowchart which shows a selecting screen displaying outputting process;
FIGs. 7(A) and 7(B) are displaying outputting examples of the portable terminal;
FIGs. 8(A) and 8(B) are displaying outputting examples of the portable terminal;
FIGs. 9(A) and 9(B) are displaying outputting examples of the portable terminal;
FIGs. 10(A) and 10(B) are displaying outputting examples of the portable terminal;
FIG. 11 is a displaying outputting example of the portable terminal;
FIGs. 12(A) and 12(B) are displaying outputting examples of the portable terminal;
FIG. 13 is one traveling-assist screen displaying example;
FIG. 14 is one working-machine setting screen example;
FIG. 15 is a flowchart which shows traveling-assist controlling;
FIG. 16 is a flowchart which shows reference-measurement point setting controlling;
FIGs. 17(A) and 17(B) are outline description diagrams which show starting point setting examples;
FIGs. 18(A) to 18(C) are outline description diagrams which show ending point setting examples;
FIG. 19 is a flowchart which shows traveling-assist guidance controlling;
FIG. 20 is one displaying screen example which shows a traveling-assist guidance state;
FIGs. 21(A) to 21(C) are outline description diagrams which show assist arrow displaying;
FIG. 22 is one displaying screen example which shows another traveling-assist guidance state;

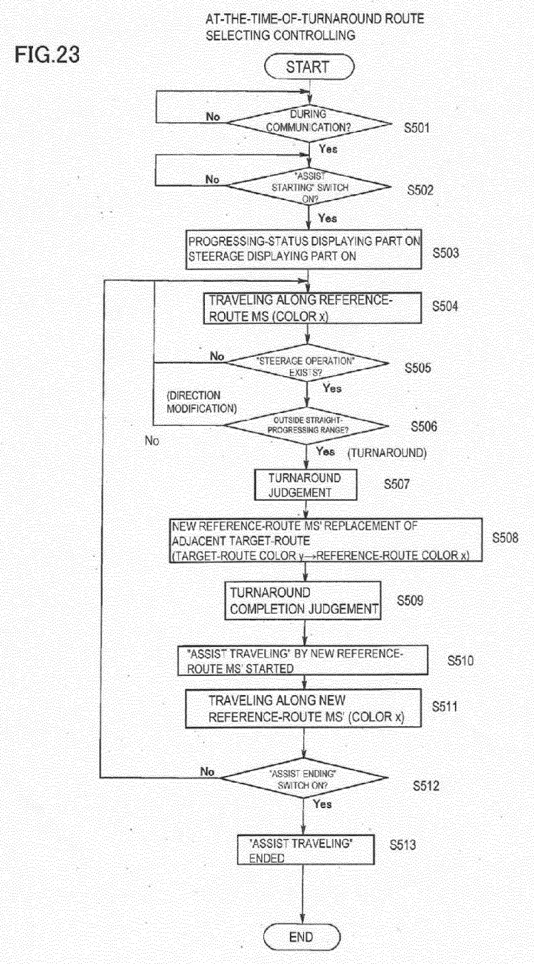

FIG. 23 is a flowchart which shows at-the-time-of-turnaround route selecting controlling; and
FIG. 24(A) is an at-the-time-of-movement position information calculating overview description diagram, and
FIG. 24(B) is an at-the-time-of-stop position information calculating overview description diagram.

### Description of the Reference Numerals

- 102: progressing-status displaying part
- 103a: "assist starting" switch unit
- 103e: "reference-measurement starting" switch unit
- 103f: "reference-measurement ending" switch unit
- A, An: starting point
- B, Bn: ending point
- Bk, Bt: ending point
- MS: reference-route
- MLn: target-route
- MRn: target-route

### DESCRIPTION OF THE EMBODIMENTS

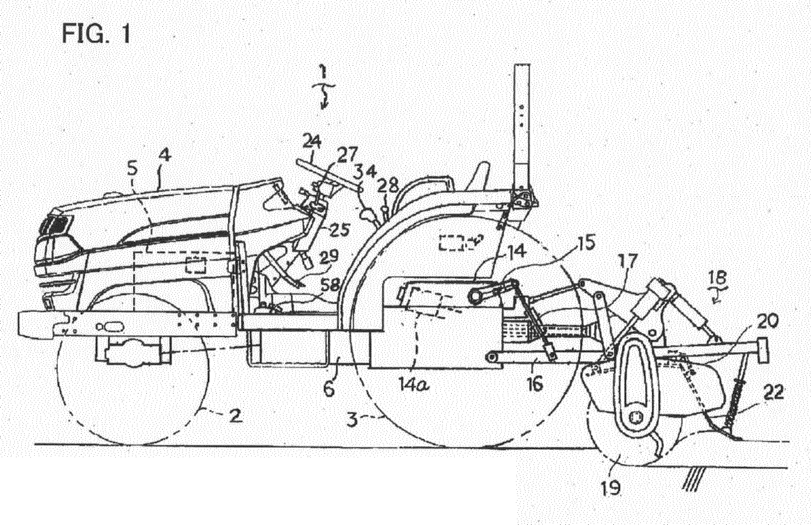

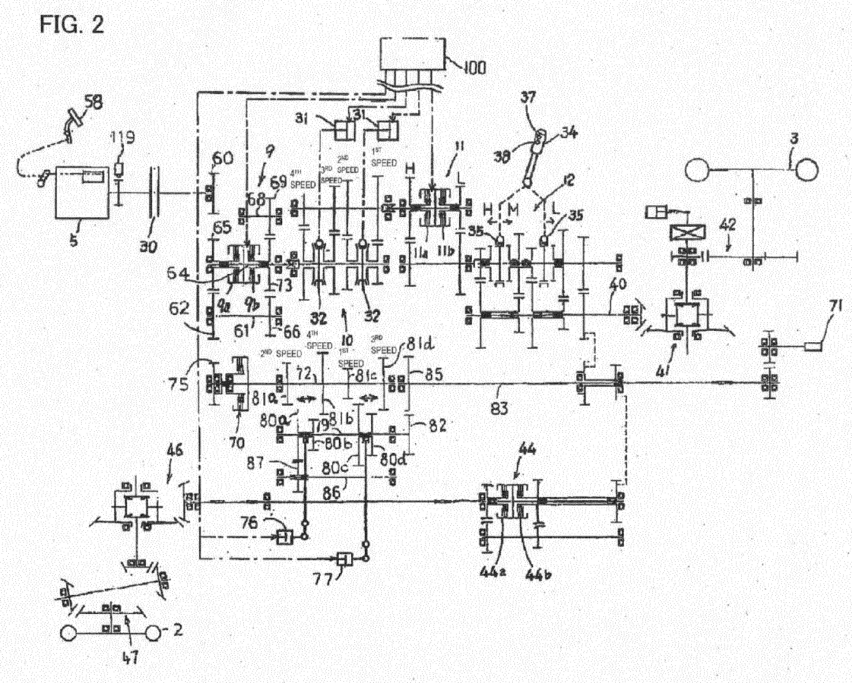

Practical examples of the present invention are descried also with drawings. In the present practical example descriptions are given regarding a tractor which is a typical example of a working vehicle. The tractor is a tractor being able to carry out main speed-changing 8 steps, auxiliary speed-changing 3 steps, namely, speed-changing of 24 steps in all, a side view of a tractor 1 is shown in FIG. 1, and a motive force moving-transference mechanism (power train) diagram is shown in FIG. 2.

This tractor 1 has front wheels 2, 2 being for steerage and rear wheels 3, 3 as propulsion vehicle-wheels, appropriate speed-reduction of the rotation motive force of an engine 5 loaded within a bonnet 4 is carried out by the speed-changing device within a transmission case 6, and the configuration is given in such a manner that the rotation motive force thereof is transmitted to the rear wheels 3, 3. The configuration may be allowed to be such that the rotation motive force of the engine 5 is conveyed not only to the rear wheels 3, 3 but also to the front wheels 2, 2, and that all the four wheels are driven.

Moreover, within a transmission case 6, a frontward/rearward movement switching device 9 which switches the progressing-direction of the machine-body (meaning the main-body of the tractor), main speed-changing devices 10, 11 being able to carry out speed-changing of 8 steps and an auxiliary speed-changing device 12 being able to carry out speed-changing of 3 steps are serially connected.

In FIG. 1, provided at the upper part of the transmission case 6 is an oil-pressure cylinder case 14, and pivotally attached on the left-and-right both sides of this oil-pressure cylinder case 14 so as to freely rotationally move are lift-arms 15, 15. Interveningly joined between the lift-arms 15, 15 and lower-links 16, 16 are lift-rods 17, 17, and joined at the rear part of the lower-links 16, 16 is a rotary tilling device (cultivator) 18 which is a working-machine.

If an oil-pressure operation lever 28 is operated and the actuation oil is supplied to an oil-pressure cylinder 14a which is accommodated within the oil-pressure cylinder case 14, then the lift-arms 15, 15 are rotationally moved to the ascending side, and via the lift-rods 17, the lower-links 16 and the like the aforesaid rotary tilling device 18 ascends. On the contrary if this oil-pressure operation lever 28 is operated to the descending side, then the actuation oil within the oil-pressure cylinder 14a is discharged within the transmission case 6 which is also an oil-pressure tank, and the lift-arms 15, 15 are made to descend.

Additionally, the aforesaid rotary tilling device 18 has a tilling part 19, a main cover 20 which covers the tilling part 19 from above, a rear cover 22 which is pivotally attached to the rear part of the main cover 20 and the like.

Moreover, provided at the left side upper part of a handle post 25 which supports a steering handle 24 is a frontward/rearward movement switching lever 27 which operates the aforesaid frontward/rearward movement switching device 9, and the manner is such that the machine-body moves frontward if this frontward/rearward movement switching lever 27 is pushed to the front side from the neutral position and that, on the contrary, the machine-body moves rearward if the frontward/rearward movement switching lever 27 is drawn to the rear side.

In the following, based on the motive force line diagram shown in FIG. 2, descriptions are given regarding the motive force transmission system.

Provided at the rear part of the engine 5 is a main clutch 30, and provided at the moving-transference rear-position of this main clutch 30 is the frontward/rearward movement switching device 9. The frontward/rearward movement switching device 9 consists of oil-pressure clutches 9a, 9b of a multiple-disc-friction-type, and is kept at the neutral position in an ordinary state and, by operating the frontward/rearward movement switching lever 27 in the front-and-rear direction, the frontward movement side oil-pressure clutch 9a is connected, or alternatively the rearward movement side oil-pressure clutch 9b is connected.

When the frontward movement side oil-pressure clutch 9a is connected, the motive force is, going from an inputting gear 60 via a gear 62 of a counter shaft 61 and a gear 65 of a reverser shaft 64, transmitted to the frontward movement side oil-pressure clutch 9a, and positive rotation of the reverser shaft 64 is carried out.

Moreover, when the rearward movement side oil-pressure clutch 9b is connected, the motive force is, going from the inputting gear 60 via the gear 62 of the counter shaft 61, a gear 66 of the counter shaft 61 and a gear 69 of a counter shaft 68, and going via a gear 73 for rearward movement of the reverser shaft 64, transmitted to the rearward movement side oil-pressure clutch 9b, and reverse rotation of the reverser shaft 64 is carried out.

Provided at the rear-position of this frontward/rearward movement switching device 9 is the first main speed-changing device 10 of a synchromesh-type able to carry out 4-step speed-changing and, if actuators 31, 31 expand or contract receiving a command from a controller 100 described later, then shifters 32, 32 are made to move frontward/rearward and perform speed-changing. In FIG. 2, the 4^{th} speed and the 3^{rd} speed are obtained if the shifter 32 on the front side moves frontward/rearward, and the 2^{nd} speed and the 1^{st} speed are obtained if the shifter 32 on the rear side makes a frontward/rearward movement. Additionally, in this case, the configuration is given in such a manner that when the main speed-changing is switched, primarily the oil-pressure clutches of the frontward/rearward movement switching device 9 of an oil-pressure-type are returned to the neutrality, and after the speed-changing these oil-pressure clutches of the frontward/rearward movement switching device 9 are again connected.

And, provided at the rear part of this first main speed-changing device 10 is the second main speed-changing device 11 of an oil-pressure-type able to carry out switching in high-and-low 2 steps. An oil-pressure clutch 11a on the front side is a clutch being for high-speed, and an oil-pressure clutch 11b on the rear side is a clutch being for low-speed. Therefore, in the main speed-changing devices 10, 11 in this practical example, speed-changing of 8 steps in all of 4×2 is able to be carried out.

Further, provided at the rear part of this second main speed-changing device 11 is the auxiliary speed-changing device 12 being able to carry out speed-changing of 3 steps with a speed-reduction ratio being comparatively large compared with the main speed-changing devices 10, 11. As shown in FIG. 2, the high-speed (H) and the medium-speed (M) are obtained if an auxiliary speed-changing lever 34 is operated and a shifter 35 on the front side is made to move frontward/rearward, and the low-speed (L) is obtained if a shifter 35 on the rear side is made to move to the rear side.

When the auxiliary speed-changing device 12 is operated, an ON/OFF operation of the main clutch 30 is required. Namely, a main clutch pedal 29 is stepped on and the auxiliary speed-changing lever 34 is operated in the front-and-rear direction or alternatively in the left-and-right direction, and after the speed-changing operation the main clutch pedal 29 is released and the engine rotation motive force is conveyed to the speed-changing device side.

Additionally, regarding the main speed-changing devices 10, 11, a speed-increasing switch 37 and a speed-reduction switch 38 which are provided to the knob of the auxiliary speed-changing lever 34 are pressed on and the speed-changing is performed (refer to FIG. 2). If the speed-increasing switch 37 or the speed-reduction switch 38 is pressed, then the speed-changing is performed step by step, and in the range from the 1^{st} speed with the speed being slow to the 8^{th} speed with the speed being fast the speed-changing of the main speed-changing devices 10, 11 is allowed to be performed. And, the motive force with speed-reduction carried out by this auxiliary speed-changing device 12 is conveyed to a drive pinion shaft 40, and the rear wheels 3, 3 are driven sequentially via a rear wheel differential device 41, a final speed-reduction device 42.

The motive force which has branched off from the rear wheel driving system before reaching the rear wheel differential device 41 is utilized as the front wheel driving system, and provided within the front wheel driving system is a front wheel speed-increasing device 44 which makes the front wheels 2, 2 be driven at an equal-speed with the rear wheels 3, 3, and/or makes the front wheels 2, 2 rotate with speed-increasing compared with the rear wheels 3, 3. A front wheel speed-increasing state is gotten if an oil-pressure clutch 44a on the front side of this front wheel speed-increasing device 44 is connected, an equal-speed four-wheel-driving state is gotten if an oil-pressure clutch 44b on the rear side is connected, and a state of two-wheel-driving where only the rear wheels 3, 3 are driven is gotten if both of the oil-pressure clutchs 44a, 44b become OFF. Provided to the front wheel driving shaft are a front wheel differential device 46 and a front wheel final speed-reduction device 47.

Additionally, in the motive force transmission line diagram of FIG. 2, only when the auxiliary speed-changing device 12 becomes of the high-speed (H), if the auxiliary speed-changing lever 34 is made to move sideways as it is, then switching to the on-the-road speed position (HH) suitable to the on-the-road traveling-speed is carried out. In this case, for the main speed-changing, out of the speeds from the 1^{st} speed to the 8^{th} speed, only the 5^{th} speed, the 6^{th} speed, the 7^{th} speed, the 8^{th} speed on the high-speed side can be selected. Since high-speed traveling is assumed in a case where traveling on the road is carried out, only the high-speed side is given preference, the low-speed side is made to be automatically cut and entry into the 1^{st} to 4^{th} speeds is not allowed even if a speed-changing operation is performed, and the operability is made to improve.

Moreover, in this practical example the speed-changing pattern on the high-speed side being able to carry out selecting is allowed to be a pattern of 4 steps of the 5^{th} speed, the 6^{th} speed, the 7^{th} speed, the 8^{th} speed, but the speed-changing pattern may be allowed to be a pattern of 3 steps of the 6^{th} speed, the 7^{th} speed, the 8^{th} speed, or alternatively allowed to be a pattern of only 2 steps of the 7^{th} speed, the 8^{th} speed, and the speed-changing step-number may be decreased like this.

The driving of a PTO output shaft 83 is performed as follows.

The motive force is transmitted to a gear 75 for driving of a PTO clutch 70 from the inputting gear 60 via the gear 62 of the counter shaft 61, and the motive force transmission is carried out to the PTO clutch 70. If the PTO clutch 70 gets into an ON state, then driven at the speed-changing step which is being selected in the 4-step speed-changing gear mechanism (which consists of a gear 81a of the 3^{rd} step, a gear 81b of the 1^{st} step, a gear 81c of the 4^{th} step and a gear 81d of the 2^{nd} step) with slide-controlling being carried out by two oil-pressure cylinders 76 and 77 is a PTO driving shaft 71.

For example, if a gear 80a on a follower shaft 79 which is slid by the oil-pressure cylinder 76 engages with the gear 81a of a PTO speed-changing shaft 72, then the motive force transmission going via an outputting gear 82 of the follower shaft 79 is carried out from the PTO speed-changing shaft 72 to an outputting gear 85 of the PTO output shaft 83 and the PTO driving shaft 71 is driven (the PTO 2^{nd} speed). Similarly, if by the oil-pressure cylinder 76 a gear 80b engages with the gear 81b, then the PTO 4^{th} speed is gotten. If by the oil-pressure cylinder 77 a gear 80c engages with the gear 81c, then the PTO 1^{st} speed is gotten. If by the oil-pressure cylinder 77 a gear 80d engages with the gear 81d, then the PTO 3^{rd} speed is gotten.

Moreover, if taken is a state where a reverse-rotation gear 87 on a reverse-rotation shaft 86 is made to slide and to mesh together with the aforesaid gear 81a and also meshes also with the gear 80a, which is a state where the aforesaid gear 80a does not mesh with the gear 81a, then the reverse-rotation of the PTO driving shaft 71 is carried out. In a case of reverse-rotation there is only this 1^{st} speed.

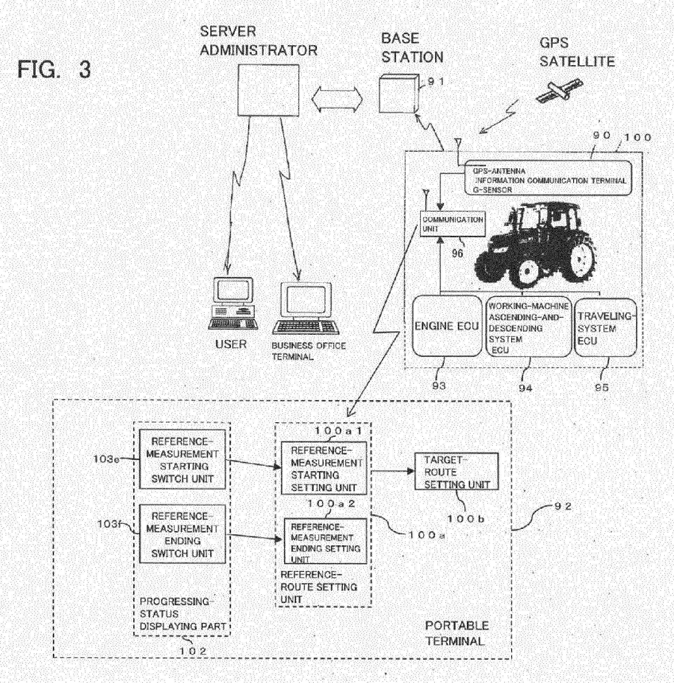

A usage appearance of the information communication terminal used in the above-mentioned tractor is shown in FIG. 3.

A reference-route setting unit 100a sets a straight-line reference-route MS of a machine-body of the tractor 1, which is one example of the agricultural working vehicle of the present invention. A target-route setting unit 100b sets a target-route MLn, MRn... parallel to the reference-route MS. A progressing-status displaying part 102, which is one example of the displaying part of the present invention, displays the reference-route MS and the target-route MLn, MRn....

A portable terminal 92, which is one example of the route setting device of the present invention, comprises a "reference-measurement starting" switch unit 103e which accepts a setting operation of reference-measurement starting, and a "reference-measurement ending" switch unit 103f which accepts a setting operation of reference-measurement ending.

The reference-route setting unit 100a has a "reference-measurement starting" setting unit 100a1 which sets a starting point A, An of the reference-route MS based on the setting operation of the "reference-measurement starting" switch unit 103e, and a "reference-measurement ending" setting unit 100a2 which sets an ending point B, Bn... of the reference-route MS based on the setting operation of the "reference-measurement ending" switch unit 103f.

The tractor is loading in the vehicle an information communication terminal 90 with a GPS antenna built-in and is able to carry out, by said information communication terminal 90, wireless communication with a base station 91, and said base station 91 is able to communicate with a server administrator a manufacturer of the tractor or the like takes charge of.

In brief, location-point information of the machine-body by a GPS is detected by the information communication terminal 90, which is one example of the location-point information detecting unit of the present invention.

Further, the configuration is such that the server administrator is able to communicate with a user of the tractor, a terminal being at a business office or the like of the manufacturer of the tractor.

Within the tractor there are, as the base information of the vehicle, vehicle administration information, vehicle running information, working-machine base running information, and the configuration is such that the information collection of these to the aforesaid information communication terminal 90 is carried out. Here, arranged in the information communication terminal 90 are a GPS antenna or module, a communication antenna or module, a G (acceleration) sensor, a memory, a battery and the like. Additionally, included within the aforesaid vehicle administration information are, for example, a machine-kind, a model-type, a vehicle specifying number such as a machine-serial-number or the like, working-on time which is vehicle-hour-meter information, position information the GPS furnishes, within the aforesaid vehicle running information there are, for example, engine oil pressure, engine cooling-water-temperature, instantaneous fuel-consumption, a fuel remaining-quantity, 3P (the lift-arms of the working-machine) position information, a traveling-speed-changing position, vehicle vehicle-speed information, a PTO rotation number (hereinafter, the rotation number is RPM (Revolution Per Minute) or the like), an engine rotation number and the like, and within the aforesaid working-machine base running information there are, for example, a machine-kind, a model-type, a vehicle specifying number such as a machine-serial-number or the like, (A) tilling-width information, tilling-depth information and the like in a case where the working-machine is a rotary tilling device, (B) agricultural-chemical spraying quantity (a spraying quantity per unit square-measure), agricultural-chemical tank remaining-quantity, spraying-width information, harvest-quantity information and the like in a case where the working-machine is a chemical-liquid spraying device.

And, the aforesaid information communication terminal 90 collects the information acquired from the above-mentioned tractor and performs analysis, processing of the data and, as the said information, there are vehicle running information, collection of the working-on time, collection of the fuel-consumption, vehicle information such as breakdown information or the like, working-on information of every working-machine, working-machine consumption-product (for example, a fertilizer used and the like) information, working running route information, agriculture machine peculiar information such as vehicle-speed information of every working-machine or the like. Moreover, by the aforesaid analysis, processing of the data, information such as maintenance timing-advice, economical running recommendation-advice for saving fuel-consumption or the like could be furnished. The aforesaid maintenance timing-advice is prompt correspondence of breakdown repair, consumable-component timing-advice or the like, and the aforesaid economical running recommendation-advice for saving fuel-consumption is furnishment of the soil information of every farm field or the like.

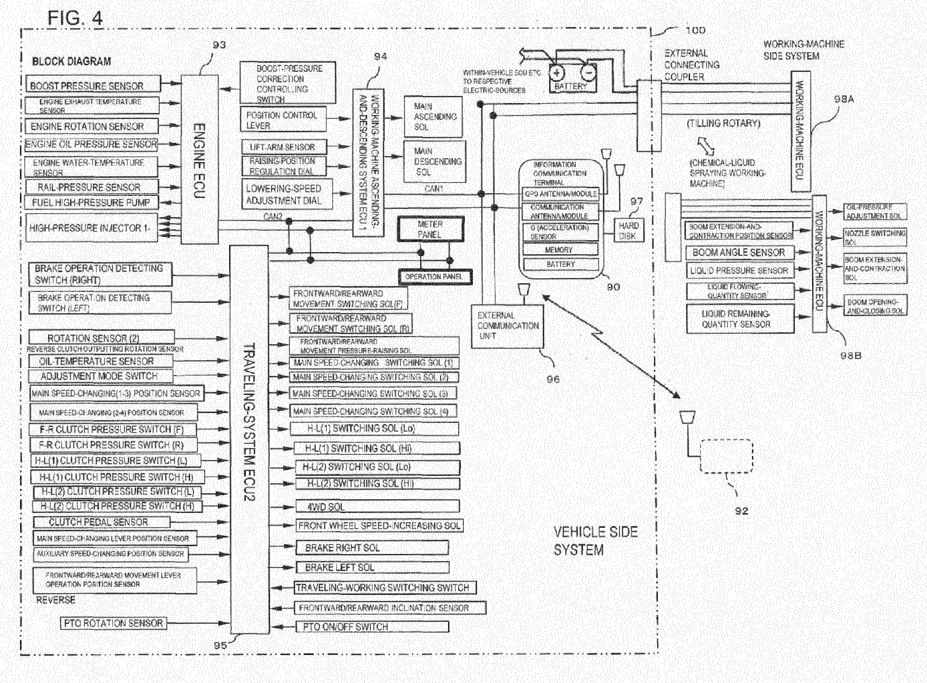

A configuration diagram of the within-vehicle LAN system of the tractor of the present practical example, and the system of the information communication terminal 90 and the portable (mobile) terminal 92 as an external device is shown in FIG. 4.

Namely, in the controlling device 100 of the tractor there are an engine ECU 93, a working-machine ascending-and-descending system ECU 94, a traveling-system ECU 95, and they are mutually connected with the CAN2 (Controller Area Network). Moreover, the tractor comprises the portable terminal 92, the information communication terminal 90 and an external communication unit 96, and given is a configuration such that with respect to the information communication terminal 90 communication via a short-range wireless communication unit (for example, Bluetooth (REGISTERED TRADEMARK)) is able to be carried out to the portable terminal 92. Moreover, connected to the information communication terminal 90 is a hard disk 97. The portable terminal 92, for which a tablet PC, a smartphone, a personal computer or the like is made use of, comprises a program which relates to the traveling-assist controlling as described later, and manages displaying by a screen and also the said controlling.

Moreover, the portable terminal 92 which has a touch panel operating part, the aforesaid information communication terminal 90 and the external communication unit 96 are mutually connected with the CAN1. Moreover, the CAN1 is connected via a working-machine ascending-and-descending system ECU 94 to tractor respective controlling systems, and is further connecting via the external connecting coupler with a working-machine ECU 98, the working-machine ECU 98A shows one example of the working-machine being the rotary tilling device 18, and the working-machine ECU 98B shows one example of the working-machine being a chemical spraying device, where a boom plural nozzles which spray chemical-liquid are attached to is loaded on the machine-body. The configuration becomes such that by the inputting of the boom extension-and-contraction position, the boom angle, the liquid-pressure of the chemical-liquid, the liquid flowing-quantity, the liquid remaining-quantity and the like, the electromagnetic solenoid can be actuated which performs the liquid-pressure adjustment, the nozzle switching, the boom extension-and-contraction, the boom opening-and-closing and the like. Additionally, if the rotary tilling device 18 is exchanged with the chemical spraying device (not shown), then connecting to the working-machine ECU 98B is gotten.

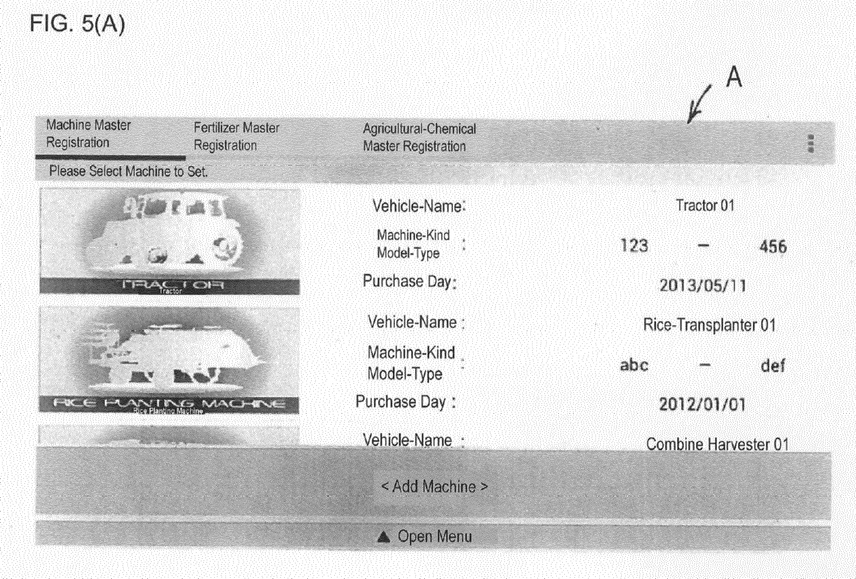

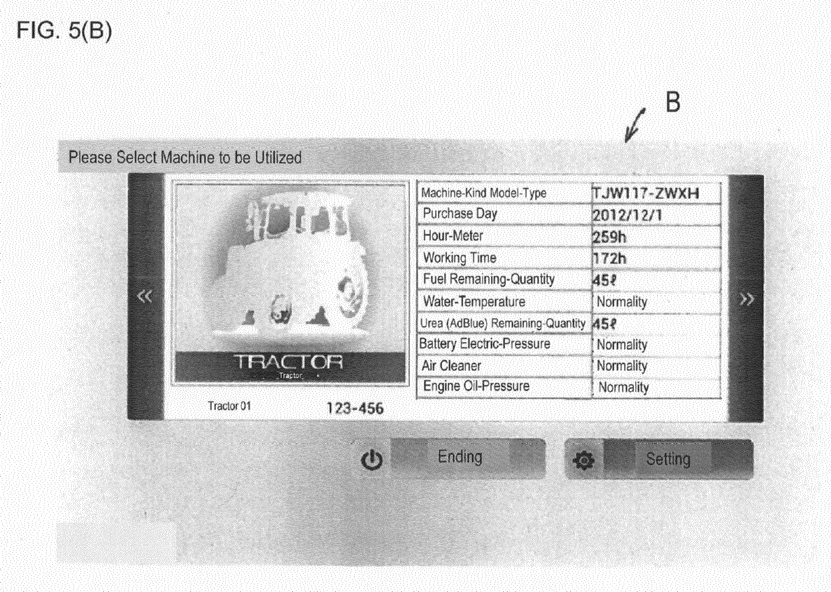

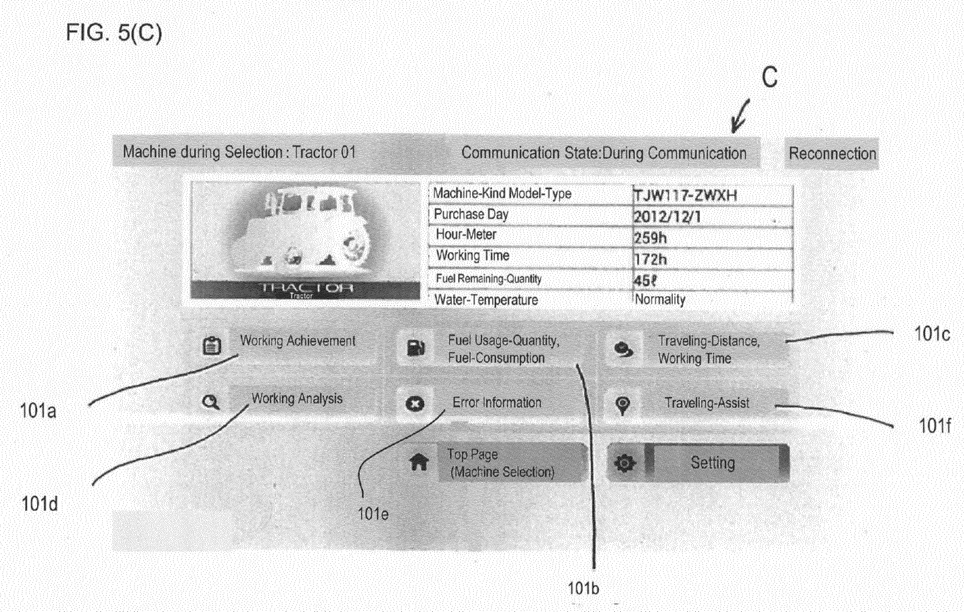

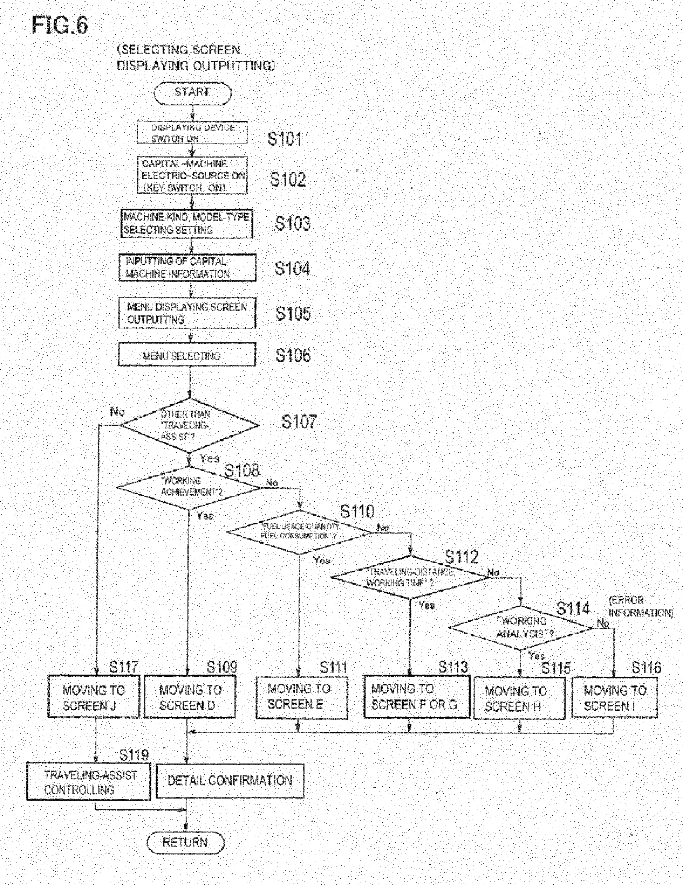

In the following, descriptions are given regarding a configuration example of the portable terminal 92. As shown in FIG. 5, the configuration is given in a manner such that with regard to said portable terminal 92, expression of various data and the like in the machine-kind and the model-type which have been selected is performed in the displaying screen and switching to the touch-type various-switches group displaying is also carried out. And, descriptions of one displaying example thereof are given following the flowchart of FIG. 6.

In the first place, the electric-source switch (not shown in the figure) of said portable terminal 92 is turned ON and the electric-source switch (the key switch) of the tractor capital-machine is also turned ON (Step 101 to Step 103). Then displayed in the portable terminal 92 is a master screen A (FIG. 5(A)) where the machine-kind of a machine to be utilized such as, for example, a tractor, a rice-transplanter, a combine harvester or the like and the model-type classification of each can be selected and, if the tractor is selected for example, then switching to a displaying screen B is carried out where the aforesaid vehicle administration information and the like of the said tractor which has been selected are displayed (FIG. 5(B)), and transition to a menu displaying screen C (FIG. 5(C)) is carried out where respective switches 101a to 101f of the "working achievement", the "fuel usage-quantity, fuel-consumption", the "traveling-distance, working time", the "working analysis", the "error information" and the "traveling-assist" have been displayed (Steps 104 to 105).

Additionally, as one example is shown in the above-mentioned FIG. 5(B), as the vehicle administration information of the tractor, what are to be displayed are the machine-kind, model-type, the purchase day, the hour-meter which shows the usage-time, the working time for which the PTO clutch ON time (meaning the period when the PTO clutch is continuously kept ON) has been accumulated, the fuel remaining-quantity within the fuel tank, the status of the water-temperature, the urea aqueous solution remaining-quantity status of SCR (Selective Catalytic Reduction) catalyst for cleaning diesel engine exhaust gas, the battery electric-pressure, the air cleaner state, the engine oil-pressure status.

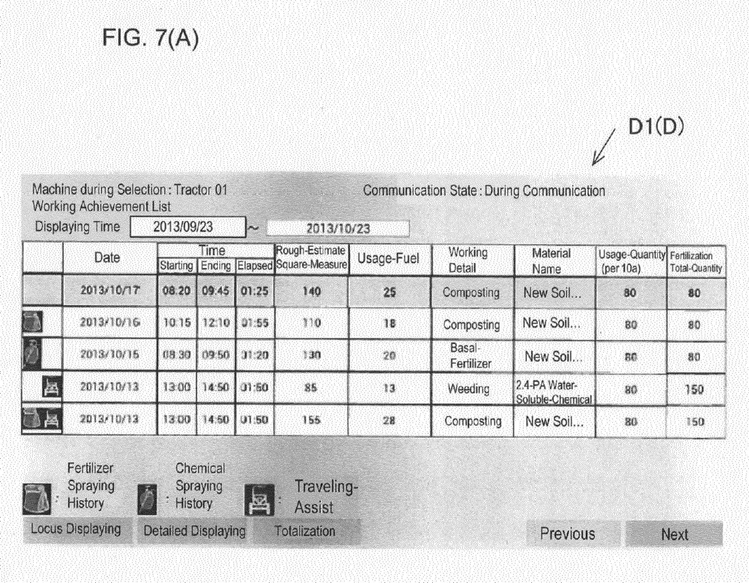

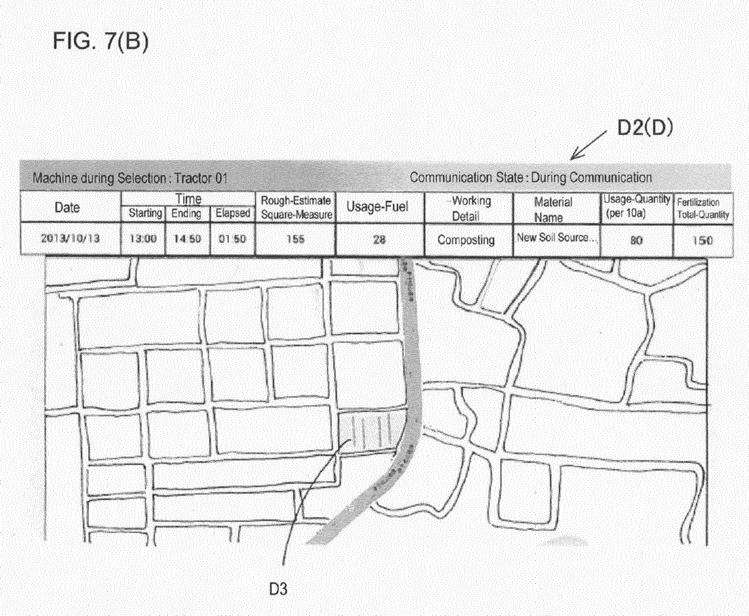

By carrying out touch selecting of a necessary switch out of these displaying switches group 101 of this menu displaying screen C, the screen transitions (Step 106 to Step 116). For example, if the "working achievement" switch 101a is selected, then switching to a list displaying D1 of a screen D (FIG. 7(A)) is carried out. This screen D displays in table form aforesaid working-machine base running information such as the working time, the working detail, the usage-material-name and the like at every day such that implementation has been carried out within the designated-period. Moreover, if switching to a map screen D2 state is carried out (FIG. 7(B)), then the farm field D3 which corresponds to the detail of the said working can be recognized visually at the same time.

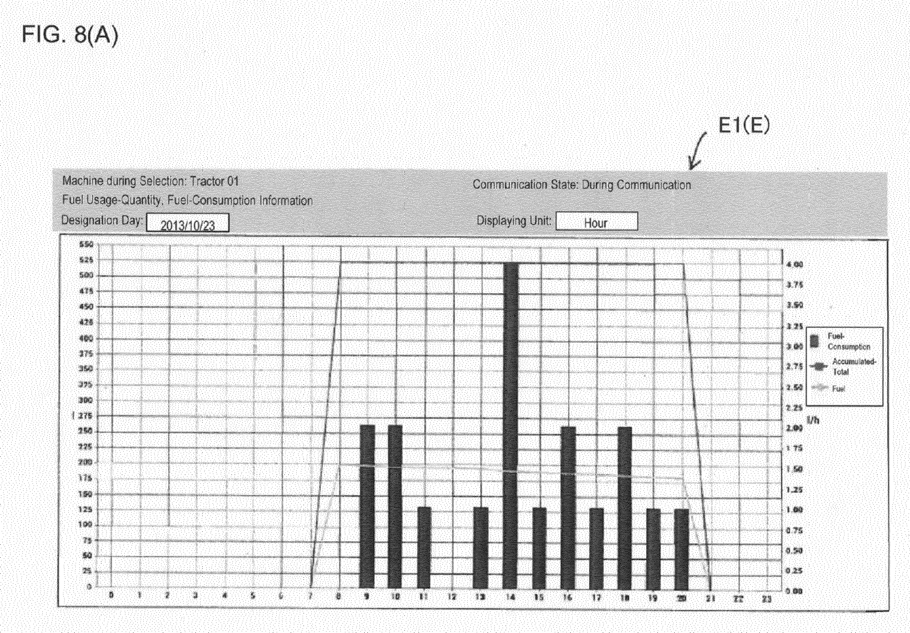

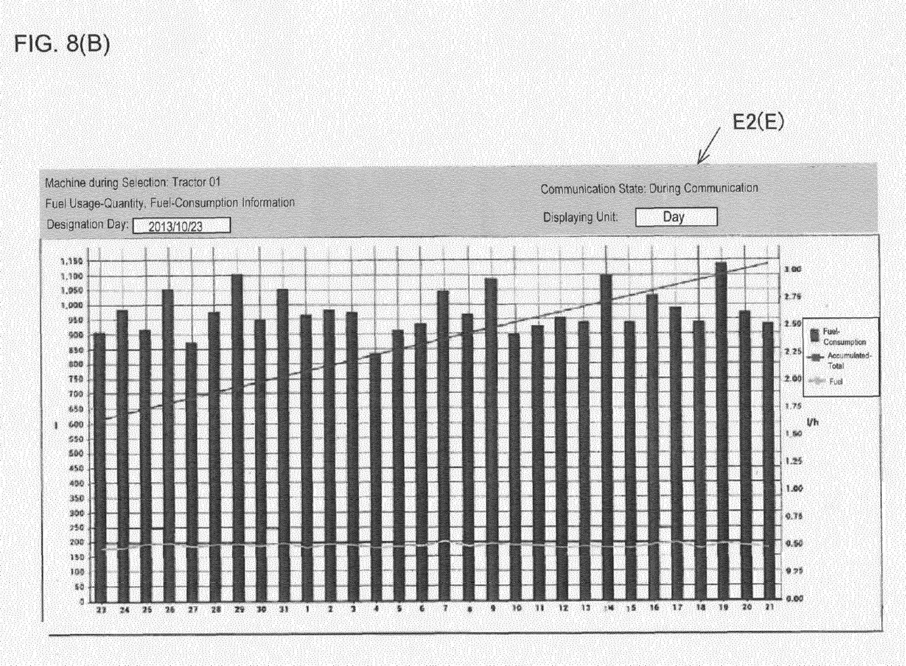

With returning to the menu displaying screen C carried out, if the "fuel usage-quantity, fuel-consumption" switch 101b is pressed, then the complex graphs of a bar graph and a polygonal line graph of a screen E1 (FIG. 8(A)), a screen E2 (FIG. 8(B)) are displayed, and the aforesaid vehicle running information is mainly displayed. Said screen E displays the fuel consumption quantity at every year, month or day which has been selected with a polygonal line graph of every unit-period or every accumulation-period, and what is displayed at the same time with a bar graph is the fuel-consumption.

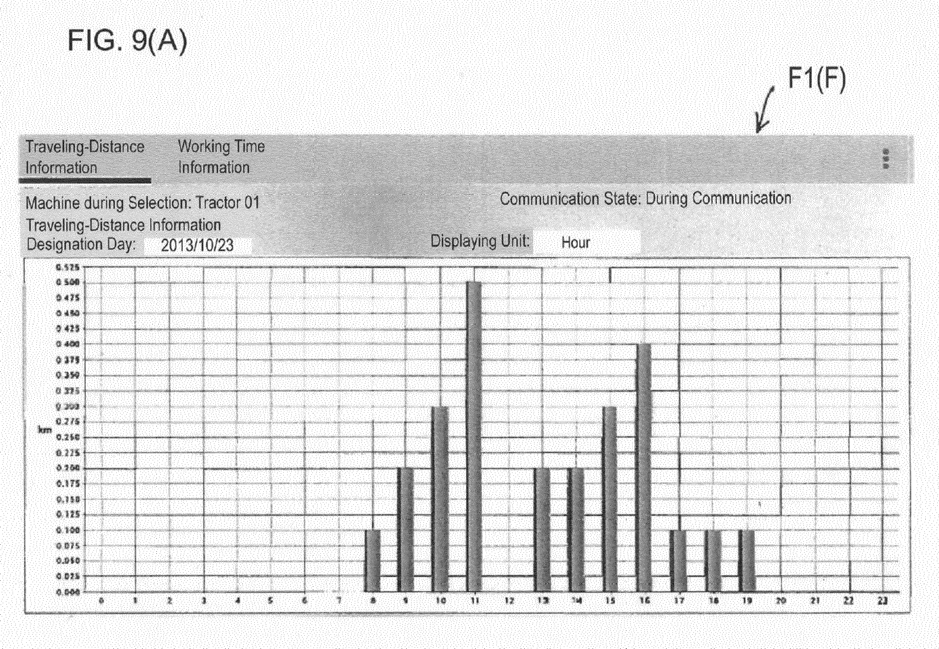

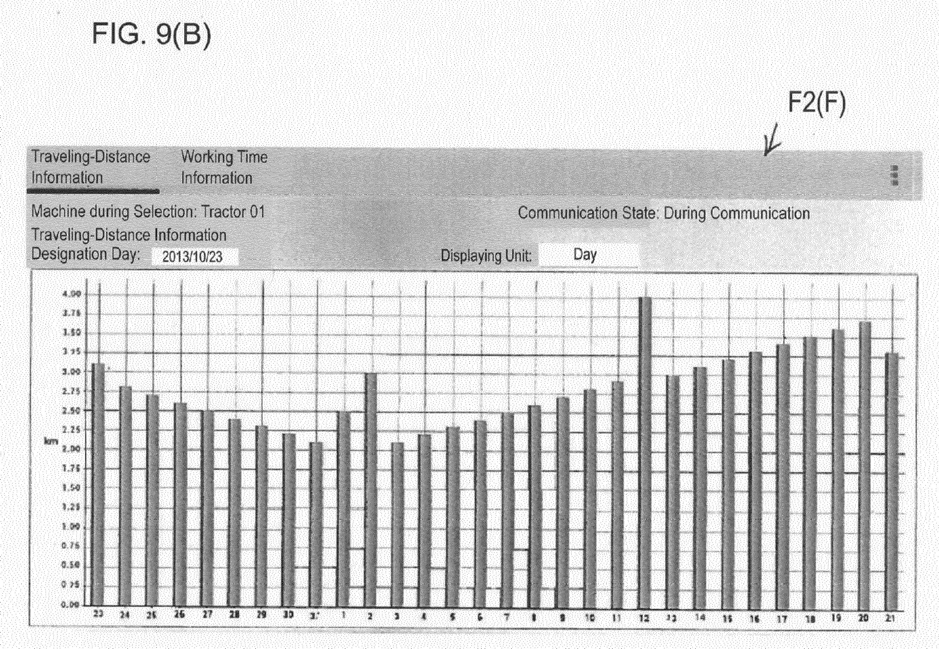

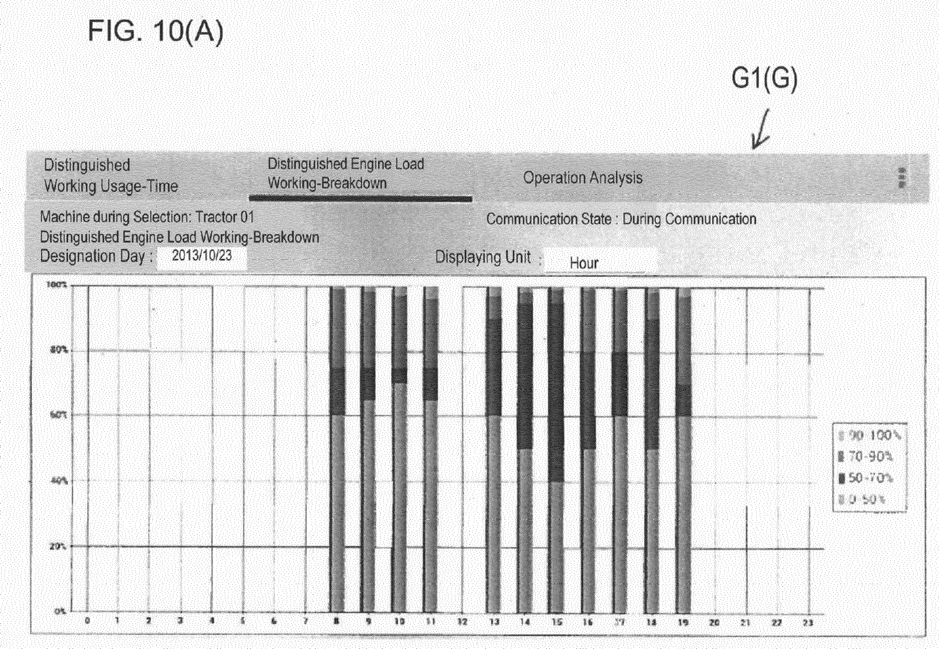

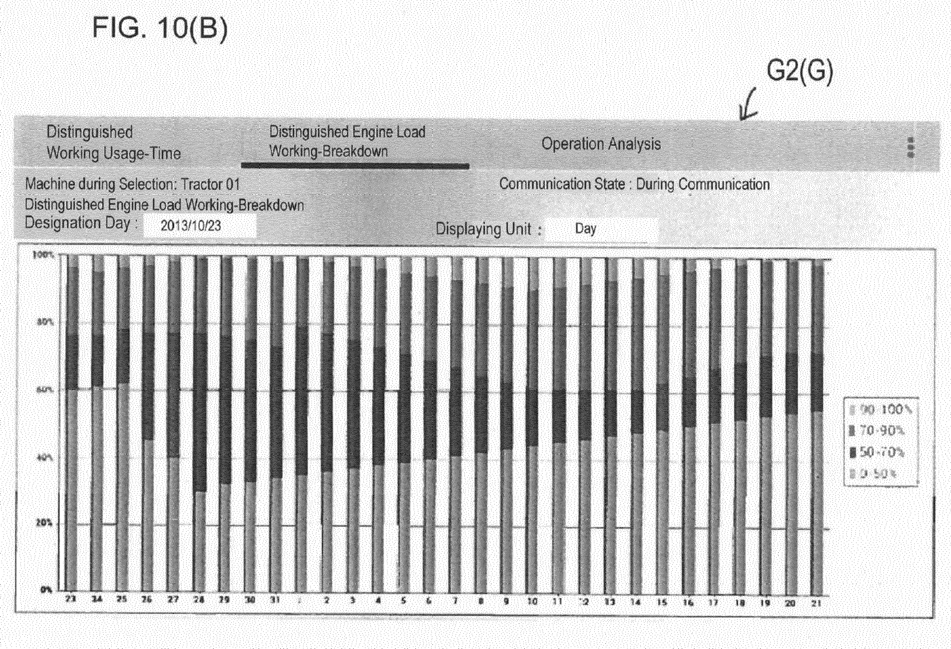

Moreover, returning to the menu displaying screen C, if the "traveling-distance, working time" switch 101c is selected, then switching to the bar graph displaying of a screen F1 (FIG. 9(A)), a screen F2 (FIG. 9(B)), a screen G1 (FIG. 10(A)), a screen G2 (FIG. 10(B)) is carried out. The screen F displays, during the engine working-on, the working time by the working-machine and other time with distinction at every day, month or the like, and the screen G displays with a bar graph the proportion at every load status classification such that classification has been carried out based on the engine load.

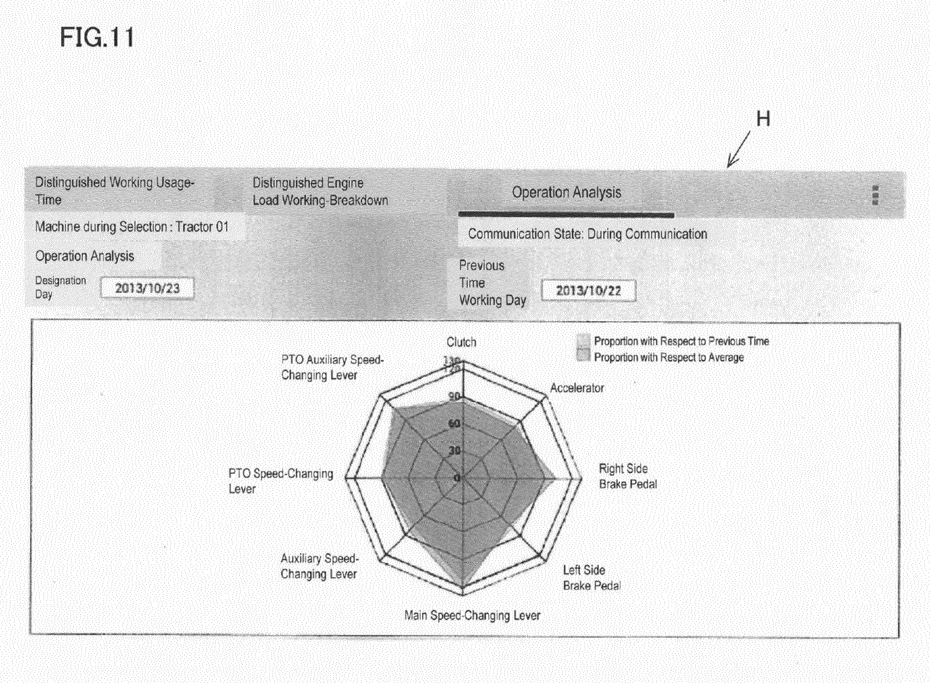

Again returning to the menu displaying screen C, if the "working analysis" switch 101d is pressed, then transition to a screen H (FIG. 11) which shows the operation counts with a radar chart is carried out. The operation counts of the right side brake pedal, the left side brake pedal, the main speed-changing lever and the like are displayed also with the average values of the analogous working of the previous time and the working of the previous year and the like, and the evaluation of the operation in the said working could be performed.

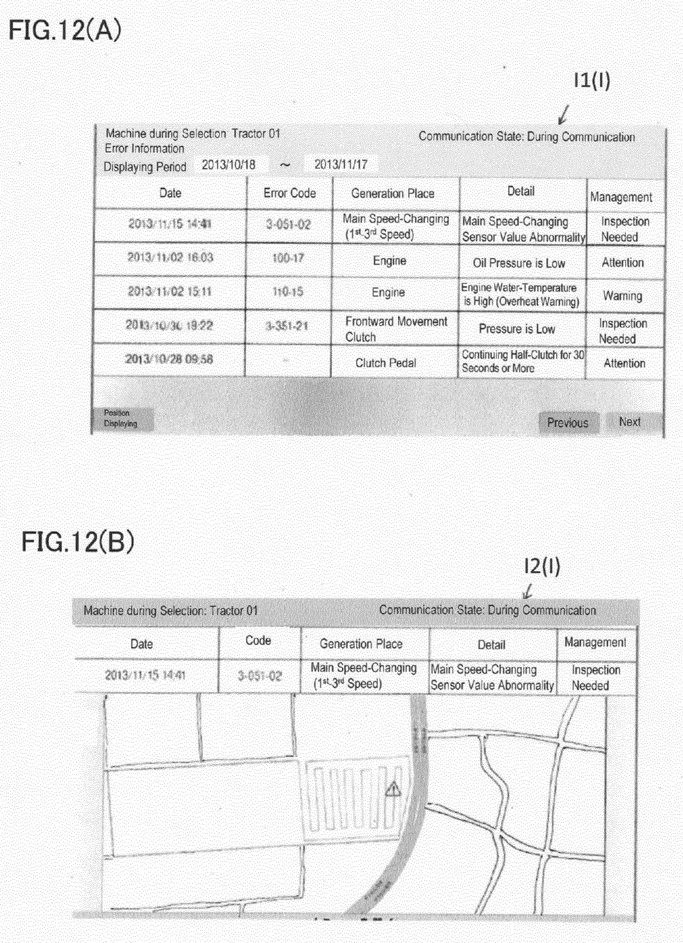

Similarly, if the "error information" switch 101e is pressed, then transition to a screen I (FIG. 12) is carried out. In the screen I, various items and the status thereof are displayed in table form, for an item which is in the warning state, a statement thereof is displayed, highlight displaying is also carried out (I1, FIG. 12(A)), and in all what can be displayed on the map by screen switching is the generation spot (12, FIG. 12(B)). For example, with warning expression of the "main speed-changing sensor value abnormality" carried out, the generation place, the detail, the management may be expressed.

In what follows, descriptions are given regarding a case where the "traveling-assist" switch 101f has been pressed.

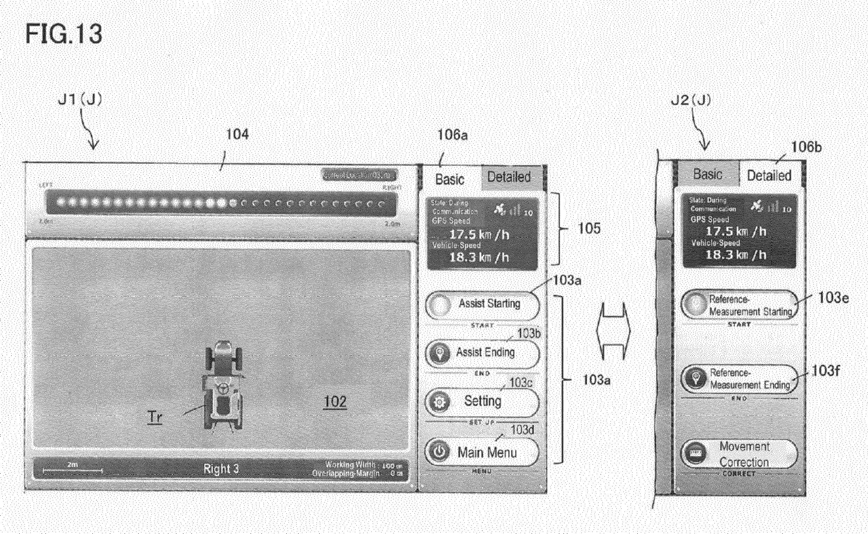

If the "traveling-assist" switch 101f is pressed, then switching to a traveling-assist screen J (FIG. 13) is carried out. For this traveling-assist screen J, there are a basic screen J1 and a detailed screen J2, and by an operation of selecting switches 106a, 106b switching can be arbitrarily carried out. The basic screen J1 comprises the progressing-status displaying part 102, a touch switches group displaying part 103 arranged at a left-and-right one side part of said displaying part 102, a steerage displaying part 104 which is arranged at the upper part of said displaying part 102 and a state-and-the-like displaying part 105, and the configuration is being allowed to be such that the situation can be displayed where in accordance with the progressing of the machine-body a tractor image Tr of the progressing-status displaying part 102 relatively moves along the course. On the other hand, in the detailed screen J2, a different point with the basic screen J1 is a point where the detail, function of the touch switches group differs.

In the first place if a touch operation of an "assist starting" switch 103a, out of the touch switches 103a to 103d of the basic screen J1, is carried out, then the working data inputting of the machine-body is started, the working-on status of tractor machine-body respective parts, for example, is input via various sensor values, and thereupon the configuration is given in such a manner that in the progressing-status displaying part 102 the working trace (hereinafter, the working locus) which accompanies the tractor movement is displayed in real time. At this time, displaying of dialog confirmation, for example, displaying of "Wish to start farm field working?" is allowed to be performed, and by selection of "Yes" the "assist starting" switch 103a operation is formally accepted. If a touch operation of an "assist ending" switch 103b is carried out, then the inputting of the above-mentioned working-on status is interrupted or alternatively a stop process of displaying of the working locus is carried out. At this time, displaying of dialog confirmation, for example, displaying of "Wish to end farm field working?" is allowed to be performed, and by selection of "Yes" the "assist ending" switch 103b operation is formally accepted.

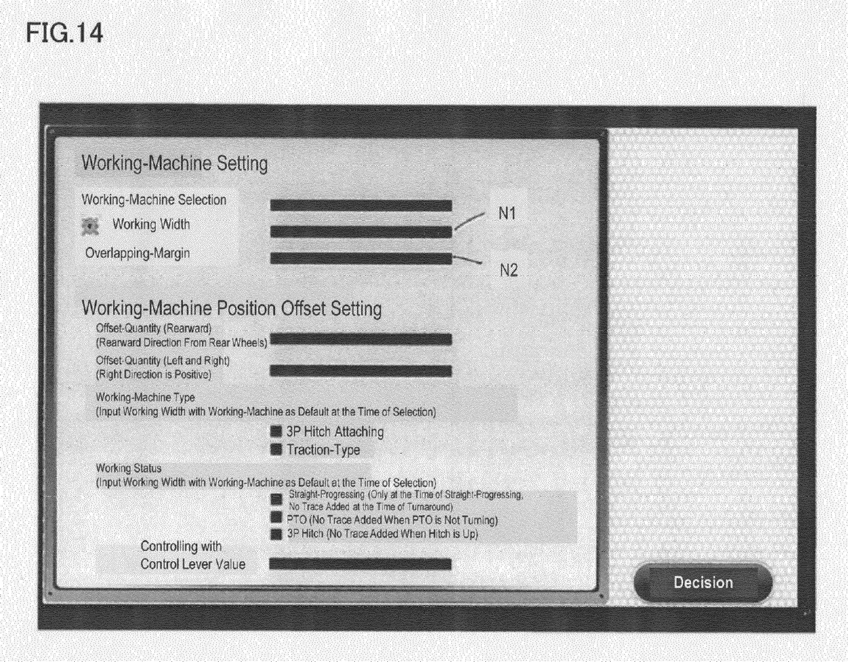

And, if a "setting" switch 103c is selected and a touch operation is carried out, then switching to the screen (not shown) is carried out where any of "traveling-assist mode selecting" and "working-machine setting" is designated, and if the "traveling-assist mode selecting" side is designated, then switching to the expressing screen (not shown) of "straight-line mode" and "curved-line mode" is carried out, any is selected and a touch operation is carried out. Additionally, the present practical example relates to a case of "straight-line mode" selection. Moreover, if the "working-machine setting" side is designated, then inputting setting of the working width W of the working-machine, for example, the rotary tilling device 18 and the overlapping-margin Y in adjacent-working can be carried out. For example, the configuration is such that numerical value inputting to numeral inputting parts N1, N2 of designation is carried out (FIG. 14).

Given are descriptions of the configuration where teaching is performed for which a reference straight-line route in the above-mentioned straight-line mode is created and, in what follows, based on this reference straight-line route an adjacent-working target straight-line route is set. The configuration is such that for both onward and backward courses out of the adjacent-working, instruction supporting of the deviation and the progressing-direction of the machine-body on the occasion of working along the target straight-line route is carried out.

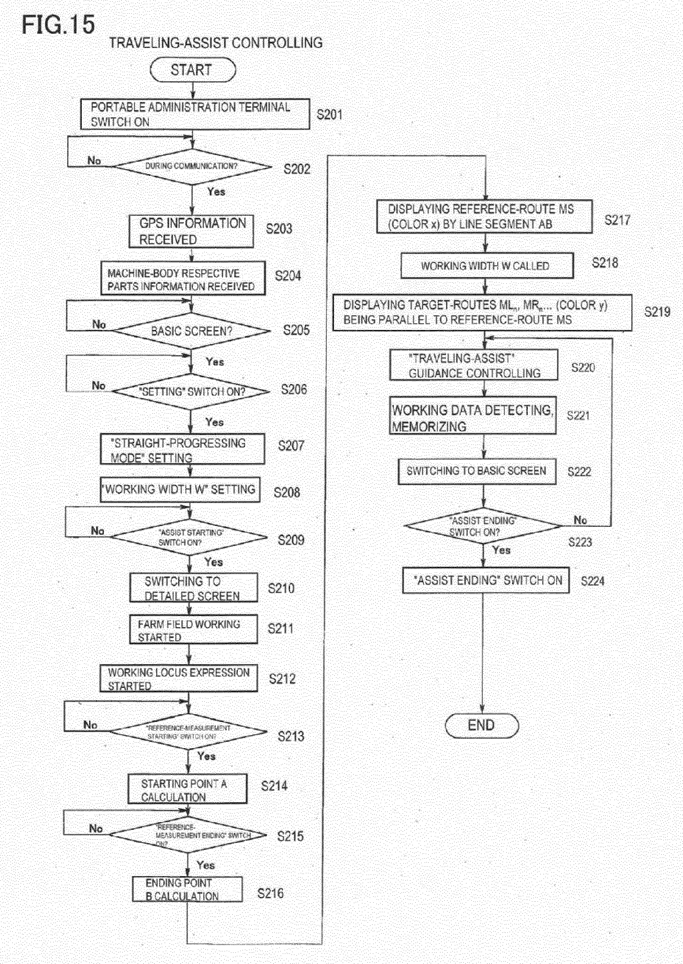

Based on the flowchart of FIG. 15, descriptions are given regarding the traveling-assist controlling. If the switch of the portable administration terminal (the portable terminal 92) is turned ON, then a communication state is gotten, and the GPS information and the machine-body respective parts information become able to be received (Step 201 to Step 204). Here, the basic screen J1 is called (Step 205), and a touch operation of the "setting" switch 103c is carried out (Step 206). As the objects of setting, the "straight-progressing mode (straight-line mode)" and the "working width W" are (Steps 207, 208) set. Upon starting of the working thereof, a touch operation of the "assist starting" switch 103a is carried out (Step 209). In what follows, switching to the detailed screen J2 is carried out beforehand for the traveling-assist screen J (Step 210). After these advance preparations have been performed, if rotary tilling working is performed, for example, then working locus displaying is displayed corresponding to the working progressing (Steps 211, 212).

If a touch operation of the "reference-measurement starting" switch 103e is carried out, then the position of the starting point A is calculated and memorized (Steps 213, 214). If a touch operation of the "reference-measurement ending" switch 103f is carried out after a predetermined distance movement has been carried out thereafter, then the ending point B is calculated (Steps 215, 216). By the line segment which links these starting point A and ending point B the reference-route MS is set, and displaying in the progressing-status displaying part 102 is carried out with the color x (Step 217).

In what follows, the working width W is called, to the reference-route MS the line segments being parallel are drawn on the left-and-right sides, these are allowed to be the target-routes MLn, MRn..., and the lines thereof are displayed with the color y different from the line color x of the reference-route MS (Steps 218, 219).

Like this, after the target-routes MLn, MRn... have been computed from the reference-route MS, the "traveling-assist" guidance controlling described later is performed (Step 220). On that occasion working data detecting and memorizing is performed and data storage is carried out beforehand (Step 221). In a case where the working is ended, switching to the basic screen J1 is carried out for the second time, and the "assist ending" switch 103b is turned ON (Step 222 to Step 224).

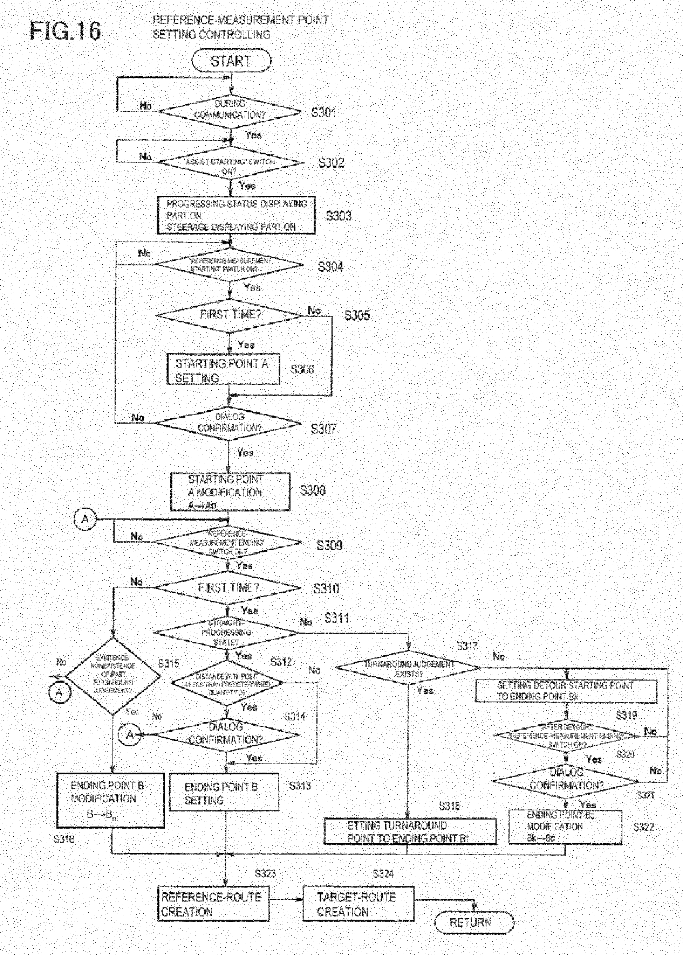

Based on the flowchart and the outline description diagrams of FIG. 16 to FIG. 18, descriptions are given in detail regarding the procedure for which the reference-measurement starting point, namely the starting point A, and the reference-measurement ending point, namely the ending point B are set. At this time, in advance, switching from the basic screen J1 to the detailed screen J2 is carried out beforehand for the traveling-assist screen J.

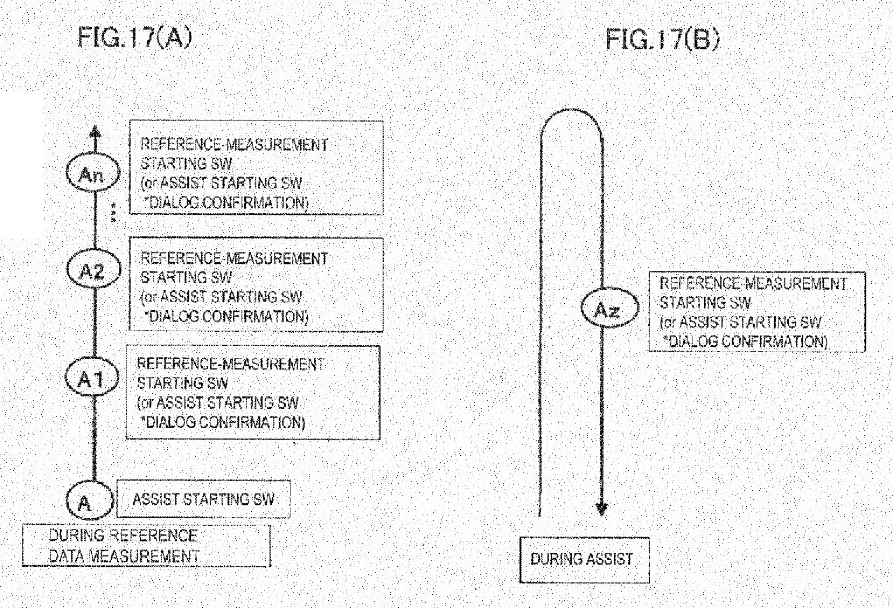

The electric-source of the portable terminal 92 is turned ON, and the portable terminal 92 is allowed to be in a communication state where the GPS information is able to be received from the information communication terminal 90 of the tractor (Step 301). And, if the machine-body moves to the farm field and arrives at the working-start location-point, then a touch operation is carried out and the "assist starting" switch 103a is turned ON (Step 302), and the progressing-status displaying part 102 and the steerage displaying part 104 also turn ON (Step 303). From this location-point selected, in the progressing-status displaying part 102 a working locus T is displayed corresponding to the machine-body movement. In what follows, at the time-point when the worker has concluded that the starting point A is suitably gotten, a touch operation of the "reference-measurement starting" switch 103e is carried out (Step 304), and if it is judged that a primary touch operation is carried out, then setting of the starting point A is carried out (Steps 305, 306). In a case where it has been judged that in Step 305 a 2nd-time or subsequent touch operation is carried out, namely, in a case where, on condition that in the controlling part the coordinate of the primary starting point A is memorized for instance, inputting of the starting point A is newly carried out, displaying of dialog confirmation, for example, displaying of "Wish to forcibly start reference-measurement?" is allowed to be performed in the detailed screen J2 (Step 307) and, only in a case where inputting of "Yes" is accepted in this dialog confirmation, the starting points A₁, A₂... are newly memorized. If an operation of the "reference-measurement starting" switch 103e is repeated n times, then the starting point A is thus renewed to be the starting point An (Step 308). Additionally, memorizing of the starting point Aₙ₋₁ and the like of the previous time or before which have been memorized are erased (FIG. 17(A)). Moreover, even after a turnaround, by carrying out a touch operation of the "reference-measurement starting" switch 103e and performing a dialog confirmation, the starting points A, An can be renewed (FIG. 17(B)).

Moreover, as according to the describing within the above-mentioned FIG. 17, the "assist starting" switch 103a is made to possess the function of the "reference-measurement starting" switch 103e. Hence, in a case of this configuration, because at the aforesaid Step 302 time-point the starting point A can be set at the same time, point rematching by forgetting can be lessened. Moreover, in a case where the worker wants to erase the starting point A at the time of the said "assist starting", it is enough to perform a touch operation of the "reference-measurement starting" switch 103e at an appropriate place as mentioned above.

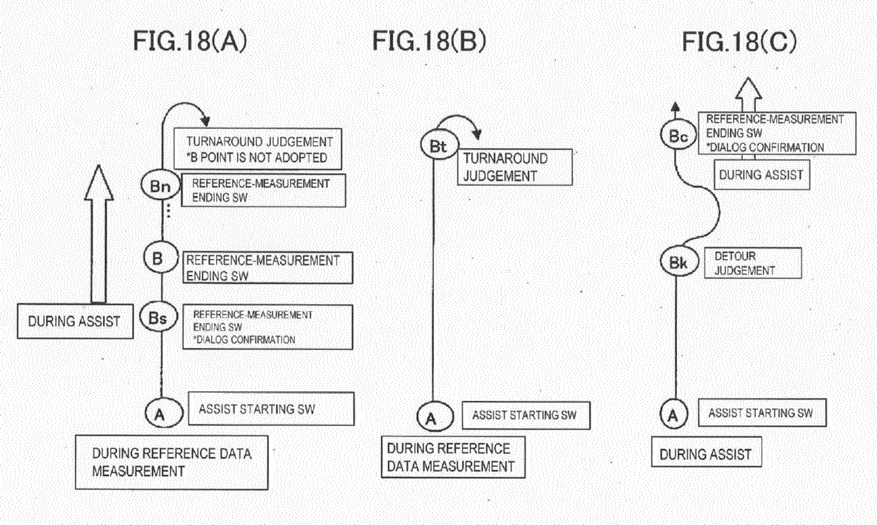

Returning to the descriptions of the flowchart of FIG. 16, at the time-point when the worker has concluded that the ending point B is suitably gotten, a touch operation of the "reference-measurement ending" switch 103f is carried out (Step 309). It is judged whether a primary touch operation is carried out, besides it is confirmed that the distance between the current location and the starting point A or An is not less than the predetermined quantity D set in advance, that is to say, that the distance between the current location and the starting point A or An is equal to or more than the predetermined quantity D (for example, equal to or more than 10m), and the ending point Bs is set (Steps 310, 311, 312, 313). When in Step 312 the distance between the current location and the starting point A or An is less than the predetermined quantity D set in advance, displaying of dialog confirmation, for example, displaying of "Reset the reference-line ending location-point to the current location?" is allowed to be performed in the detailed screen J2 (Step 314) and, only in a case where inputting of "Yes" is accepted in this dialog confirmation, the ending point B is newly memorized (Step 313). Moreover, in a case where it has been concluded that in Step 310, a 2nd-time or subsequent touch operation is carried out, on condition that a turnaround judgement has not been carried out so far after the turning ON of the "assist starting" switch 103a, the ending point is renewed from the ending point B to the ending point Bₙ (Steps 315, 316) (FIG. 18(A)).

When the straight-progressing state is not taken in the above-mentioned Step 311, namely, when a steering handle operation has been allowed to be performed, the ending point is set as below. In a case where setting of the ending point B has not been allowed to be performed yet even though a turnaround judgement has been allowed to be performed (Step 317), performed is a process such that the turnaround point, namely, the location-point where the straight-line state arrives at the turnaround starting is looked upon as an ending point Bt (Step 318) (FIG. 18(B)). Further, in a case like a detour running where a turnaround judgement is not obtained in Step 317, in the first place the turnaround starting point, namely, the change point for which a route slightly deviating from the straight-line target is pursued is provisionally memorized as an ending point Bk (Step 319), if a touch operation of the "reference-measurement ending" switch 103f is carried out after the turnaround progressing, then displaying of dialog confirmation is allowed to be performed (Steps 320, 321) and, only in a case where inputting of "Yes" is accepted in this dialog confirmation, the replacement with the ending point Bc of Step 322 is carried out (Step 322) (FIG. 18(C)). Doing like this, the line segment between any one of the starting points A and An set and the ending point B, Bₙ, Bt, Bc can be set as the reference-route MS (Step 323), and what are set are the target-routes MLn, MRn... (Step 324). Additionally, the starting points A, An are able to be modified all the time irrespective of before or after the turnaround judgement, but the configuration is being allowed to be such that for the ending points B, Bₙ and the like an alteration is not accepted after the turnaround completion.

In brief, on condition that there is not a setting operation of the "reference-measurement ending" switch unit 103f thereafter based on a predetermined criterion, a turnaround point is set as the ending point Bt based on a turnaround judgement of the machine-body. For example, a predetermined criterion like this is a criterion which relates to the traveling-distance, the elapsed time or the like.

And, a detour starting point is provisionally set as the ending point Bk, when it is judged based on a predetermined criterion that there is a setting operation of the "reference-measurement ending" switch unit 103f thereafter, the ending point Bk which has been provisionally set is cancelled, and the ending point Bc is adopted corresponding to the setting operation, and when it is judged based on the predetermined criterion that there is not a setting operation of the "reference-measurement ending" switch unit 103f thereafter, the ending point Bk which has been provisionally set is adopted. For example, a predetermined criterion like this is a criterion which relates to the traveling-distance, the elapsed time or the like.

As being mentioned above, any one of the starting points A, An of the reference-route in the straight-line mode can be arbitrarily set by a touch operation of the "reference-measurement starting" switch 103e, also in the ending points B, Bₙ, Bk, Bc setting can be arbitrarily carried out by a touch operation of the "reference-measurement ending" switch 103f, and a traveling-assist state could be given from the middle of the farm field working. Because of this, even with a deformed farm field, by operations of the "reference-measurement starting" switch 103e and the "reference-measurement ending" switch 103f the reference-route MS can be properly set, and afterward the plural target-routes MLn, MRn... can be set corresponding to the working width W, which is convenient. In particular, regarding the setting of the ending points Bk, in a case where a turnaround judgement has been performed, since the turnaround point is looked on as the ending point Bk, there is no fear of forgetting the reference-route MS setting and, moreover, the ending point Bc could be set with a detour around a vegetating fruit tree or the like, which is convenient.

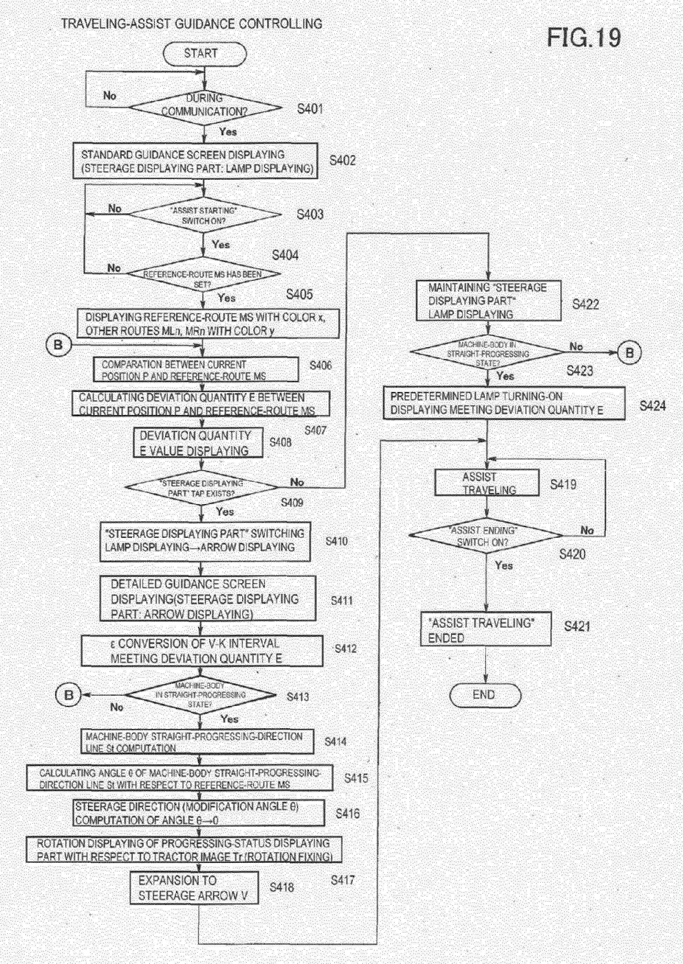

In the following, based on the flowchart of FIG. 19, descriptions are given regarding the traveling-assist guidance controlling.

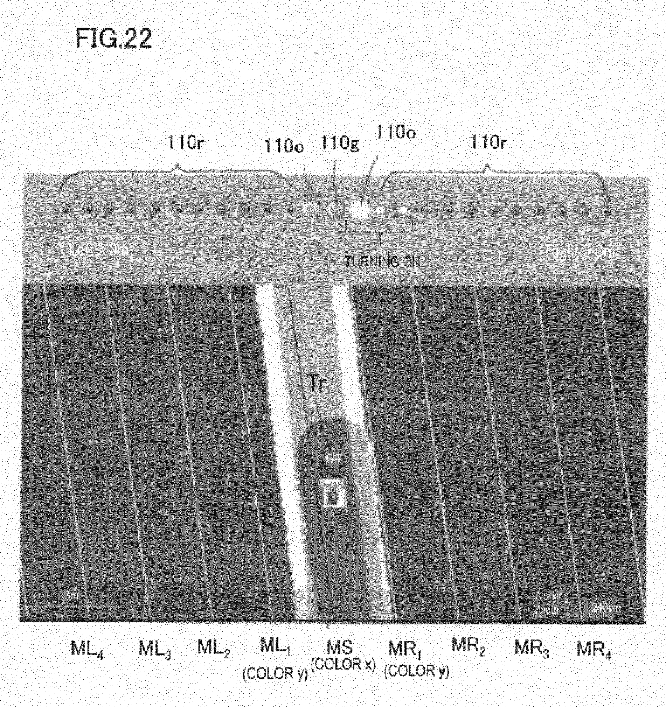

The displaying modes of the aforesaid steerage displaying part 104 of the traveling-assist screen J by the practical example are being configured with 2 kinds, out of these, in the standard guidance screen displaying the steerage displaying part 104 is configured to be lamp displaying (refer to FIG. 22), and the configuration is such that with a touch operation of this steerage displaying part 104, switching to the detailed guidance screen displaying of arrow displaying is carried out instead of the lamp displaying. The electric-source of the portable terminal 92 is turned ON, and the portable terminal 92 is allowed to be in a communication state where the GPS information is able to be received from the information communication terminal 90 of the tractor (Step 401). The standard guidance screen is displayed (Step 402), if the "assist starting" switch 103a is turned ON and the reference-route MS is set (Steps 403, 404), then in the progressing-status displaying part 102, as aforesaid, the reference-route MS of the color x and the target-routes MLn, MRn... of the color y are parallelly displayed, and displayed in the neighborhood on the reference-route MS is the tractor image Tr allowed to be toward the progressing-direction on the screen (Step 405). The deviation quantity E of the current position P from the reference-route MS is calculated by the information from the GPS (Step 408).

Here, if a touch operation of the aforesaid steerage displaying part 104 is carried out, then for the steerage displaying part 104, switching from the lamp displaying state as the standard guidance screen displaying to the arrow displaying as the detailed guidance screen displaying is carried out (Steps 409 to 411).

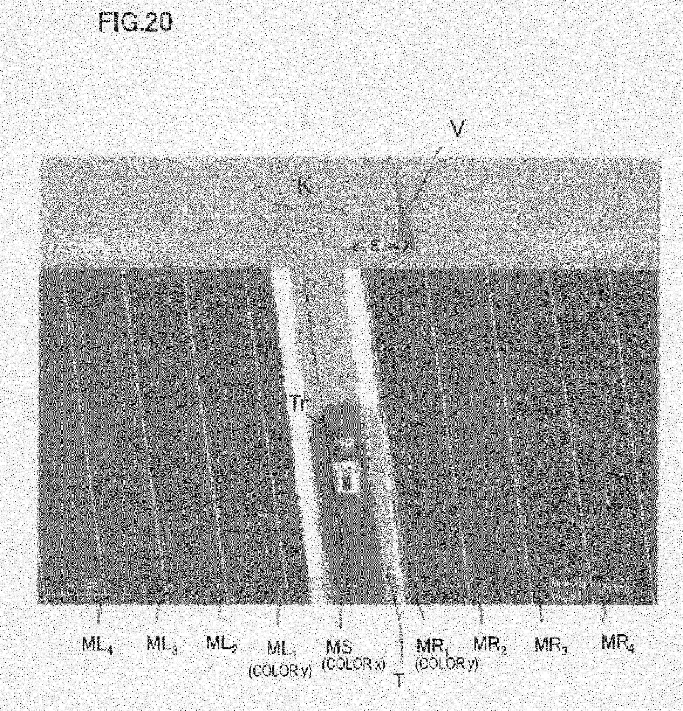

Namely, in the aforesaid detailed guidance screen displaying, the progressing-direction of the tractor machine-body is set to the upper side in FIG. 20, and setting is being carried out in such a manner that corresponding to the machine-body progressing, for the tractor image Tr (or a wide-width arrow) within the screen, with scrolling down below of the background screen, the current location-point of the tractor image Tr becomes slightly below the roughly central portion of the progressing-status displaying part 102. And, displayed in the steerage displaying part 104 of the detailed guidance screen displaying state is an assist arrow V and, for the direction of said assist arrow V, the configuration is being allowed to be such that the situation can be displayed where in accordance with the progressing of the machine-body the tractor image Tr of the progressing-status displaying part 102 relatively moves along the course. And, the configuration is being allowed to be such that displaying with a gap in the left-and-right direction from a cross point K of central can be carried out. Namely, displaying is carried out in such a manner that the magnitude of the deviation quantity E for the machine-body deviating with respect to the reference-route MS can be visually judged by a gap quantity (a shifting quantity) ε in the left-and-right direction from the central cross point K, and the assist arrow V direction displays the directing direction of the machine-body with respect to the target straight-line and the target-route. Like this, by the assist arrow V displaying of the steerage displaying part 104, the worker can easily grasp (1) the deviation quantities of the machine-body from the target straight-line and the target-route which become the reference lines and (2) the turning-direction of the steering handle 24 (Step 412).

In the following, it is judged whether or not the machine-body is in the straight-progressing state (Step 413). If it is judged that the straight-progressing state is taken, then the machine-body progressing-direction line St is computed (Step 414). Corresponding to the computation of Step 414, the angle θ the machine-body progressing-direction line St forms with respect to the reference-route MS is calculated, and the rotation displaying of the progressing-status displaying part 102 is carried out in such a manner that the tractor image Tr becomes in the upward state (Steps 415 to 417).

Additionally, the above-mentioned angle θ is calculated, specifically based on the longitude-and-latitude position information by the GPS information, from the difference between the azimuth angle of the machine-body progressing-direction line St and the azimuth angle of the reference-route MS. Additionally, what is decided in advance to be the direction along the progressing-direction is the azimuth angle of the reference-route MS.

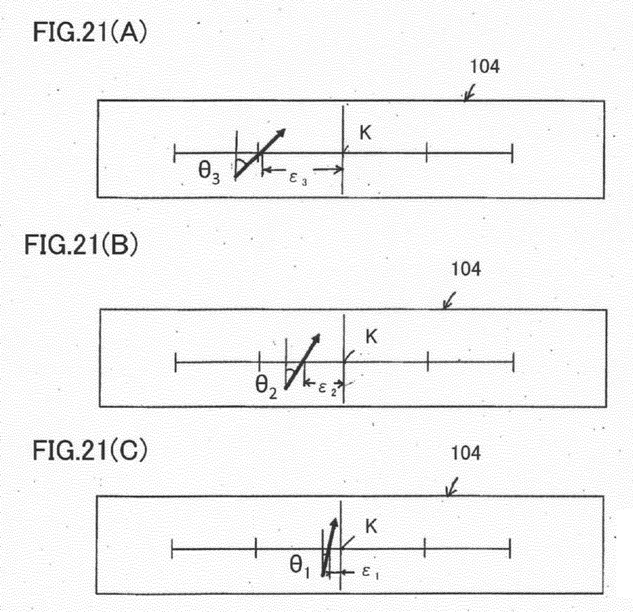

The expansion to the assist arrow V in the steerage displaying part 104 is carried out (Step 418), and assist traveling is performed and, for example, with the left-and-right inclination degree appropriately computed, toward the central cross point K, displaying could be made to be carried out in a manner such that direction modification with a little steerage quantity of the steering handle 24 is encouraged when the angle being gentle, and that direction modification with a large steerage quantity of the steering handle 24 is made to be performed when the angle being steep (Step 419). Additionally, as a simplified displaying, the mode may be allowed to be such that corresponding to the aforesaid deviation quantity E or the gap quantity ε the inclination thereof is altered. As shown in FIG. 21, by the magnitude of the deviation quantity E for the machine-body deviating with respect to the reference-route MS, setting is carried out in such a manner that when the deviation quantity E thereof is large (ε=ε3), the inclination is enlarged (θ=θ3) and that, following the diminishing of the deviation quantity E (ε=ε2→ε=ε1), the inclination becomes gentle (θ=θ2→θ=θ1). In this case, by making the direction the assist arrow V directs be toward the center line which goes through the central cross point K, the worker not only can merely recognize visually an existing gap from the target-route, but also can grasp the magnitude of the steerage rotation quantity of the steering handle 24 necessary to the modification.

Afterward the "assist ending" switch 103b is turned ON and the traveling-assist state is ended (Steps 420, 421).

If in Step 409 in the flowchart of the aforesaid a judgement of NO is performed, then the steerage displaying part 104 is maintaining and continuing the lamp displaying, after having confirmed the straight-progressing state of the machine-body, performs the lamp displaying meeting the deviation quantity E, and can encourage a direction modification (Steps 422 to 424). Namely, in one practical example of FIG. 22, for steerage displaying lamps 110, 110... which are plurally provided in a left-and-right row, the lamp-colors are such that the central one is the green-colored 110g, the adjoining two thereof are the orange-colored 11Oo's, and the remaining are the red-colored 110r's. Relevant steerage displaying lamps turn on accompanying the magnitude of the aforesaid deviation quantity E, and in the practical example the manner is allowed to be such that a simple grasping can be given by making the adjacent three ones of the steerage displaying lamps 110, 110... turn on all the time.

Hence, when the red-colored 110r's of left-and-right displacement turn on, what the worker carries out is a left-and-right steerage of the steering handle 24 for direction modification in a manner such that a state is gotten where the central one of the green-colored 110g, and the adjacent two ones of the orange-colored 110o's turn on.

In the aforesaid FIGs. 20 and 22, the progressing is carried out while the current working locus T is being displayed, and the configuration is given in such a manner that the working count can be grasped by different colorings. For example, in FIG. 20, setting is being carried out in such a manner that the coloring expression thereof becomes gradually deeper as the 1 st-time working, the 2nd-time working, the 3rd-time working are successively carried out one by one.

In the following, descriptions are given regarding the target-route selecting controlling at the time of the turnaround.

The electric-source of the portable terminal 92 is turned ON, and the portable terminal 92 is allowed to be in a communication state where the GPS information is able to be received from the information communication terminal 90 of the tractor (Step 501). Displaying states are gotten for the progressing-status displaying part 102, the steerage displaying part 104 (Step 502), and assist traveling of the tractor along the reference-route MS is carried out (Step 503). If arriving at the farm field end-part, then a steerage operation of the steering handle 24 is carried out for entry into a turnaround and, if "steerage operation" existence is detected based on the outputting from a sensor (not shown) which can detect rotation of the steering handle 24 then, in what follows, judging the outputting value from the front wheel turning-angle sensor (not shown), it is judged that a turnaround was taken when the turning-angle is equal to or more than the predetermined value (for example, 40 degrees), while it is judged that a direction modification was taken when the turning-angle is less than the predetermined value (Steps 505 to 507). Here, in a case where it has been judged that a turnaround was taken, apart from the reference-route MS thus far, out of the adjacent target-routes MLn, MRn, the route to which the machine-body is being closest is selected and, as a new reference-route MS', replacement is carried out (Step 508). At this time, for the new reference-route MS' the replacement from the color y of the target-route to the color x is carried out.

In what follows, if a judgement of "turnaround completion" (described later) is allowed to be performed, then assist traveling by the above-mentioned new reference-route MS' is gotten, namely, traveling-movement of the tractor image Tr along the color x of the new reference-route MS' is thus carried out (Steps 509 to 511). Further, by an ON operation of the "assist ending" switch 103b the assist traveling is ended (Steps 512, 513).

Additionally, setting is being carried out in such a manner that out of the target-routes MLn, MRn for which the computation displaying is being carried out in the plural, while computing the current position P of the tractor every moment based on the GPS information, what has become the target-route being nearest to the current position P is selected and the replacement from the color y to the color x is carried out, replacement from the target-route to the reference-route can be always carried out either even with adjacent-working or even with a mode chosen so that working is done for every other column, and replacement of the displaying color thereof is carried out accordingly, which is convenient to performing assist traveling.

Regarding the "turnaround completion" judgement of the aforesaid, for example, the configuration is given as follows. A machine-body straight-progressing duration judging unit which judges whether or not machine-body straight-progressing duration is taken, and a turnaround azimuth confirming unit which judges whether or not the machine-body progressing-direction line St lies in the range of the predetermined angle or less with respect to the target-routes MLn, MRn are configured, and the condition that machine-body straight-progressing duration is taken and the machine-body progressing-direction line St is within the turnaround azimuth at the same time is satisfied and thereby the "turnaround completion" judgement is performed.

Out of these, the machine-body straight-progressing duration judging unit is, for example, configured as follows. To the controlling part of the information communication terminal 90, the position information by the GPS is input every moment, and the coordinate position data of the current position P are being input. The coordinate position data q points before (for example, 3 points before), and the coordinate position data r points before (for example, 10 points before) are input, the vector with the current position P is computed, and the "movement straight-progressing judgement" is given in a case where the cosine (cos) of the angle formed by these is larger than cos σ (σ is allowed to be a minute angle, for example, 1° or the like). On the basis of this "movement straight-progressing judgement", the characteristics of the turning-angle which accompanies the steerage of the steering handle 24 of the said machine-body are corrected. For example, comparison recording of the values of the turning-angle sensor (not shown) during the "movement straight-progressing judgement" is carried out, and the turning-angle sensor value of the straight-progressing state can be arbitrarily set. Moreover, the configuration is such that the turnaround azimuth confirming unit knows the current progressing-direction by the locus data by the GPS, computes the azimuth angle with the difference between the coordinate position data v points before and the coordinate position data of the current position P, and decides the azimuth.

With regard to the flowchart of the aforesaid FIG. 19, for the rotation of the progressing-status displaying part 102 which has been described in detail in Steps 415 to 417, since the angle θ the machine-body progressing-direction line St forms with respect to the reference-route MS is calculated, and the rotation displaying of the progressing-status displaying part 102 is carried out in such a manner that the tractor image Tr becomes in the upward state, by giving image setting so that with the bonnet tip-end-part of the tractor image Tr being the center the progressing-status displaying part 102 is made to rotate, on the occasion of modifying the deviation from the reference-route MS, it is enough to perform a steering operation in such a manner that the tip-end-part of the tractor image Tr is along the reference-route MS. In reality the center of the tractor for agriculture at the time of the turnaround is in the intermediate part of the left-and-right rear wheels or the neighborhood thereof and, if intending to replace this with the virtual tractor image Tr and an environment thereof, then there is a case where visible representation cannot be carried out depending on the image mode. That is to say, expressing the center point to the coloring image impairs the visibility, and contribution to a precise piloting operation becomes rather difficult, but the virtualized image could be easily made to correspond to the reality by placing at the rotation center the forefront or the tip-end-portion of the image which signifies a progressing-object such as the tractor image or the like as being mentioned above.

Now, it is necessary that the "working achievement" screen D (FIG. 7(B)) in the present practical example, the map information displaying in the "error information" screen I (FIG. 12(B)), the traveling-assist configuration in FIG. 13 should comprise the GPS function. In the practical example of the aforesaid, mainly in the traveling-assist controlling, the configuration is being allowed to be such that the GPS information is received in the information communication terminal 90 which is loaded in the tractor and that the location-point information is obtained, but the GPS function which is ordinarily provided in the portable terminal 92 may be allowed to be utilized. When the GPS function ordinarily provided in the portable terminal 92 is adopted, the system can be inexpensively configured. Additionally, when for the GPS function of the information communication terminal 90 the high-functioning, high-accuracy is adopted, the configuration is allowed to be such that in preference to the GPS function of the portable terminal 92 the GPS function of the information communication terminal 90 side is preferentially utilized. Moreover, in a case where due to some cause a functional fault is generated for the GPS function of the information communication terminal 90 side, by allowing the configuration to be such that breakdown information is sent to the portable terminal 92 side, and that automatic switching is carried out, working can be continued.

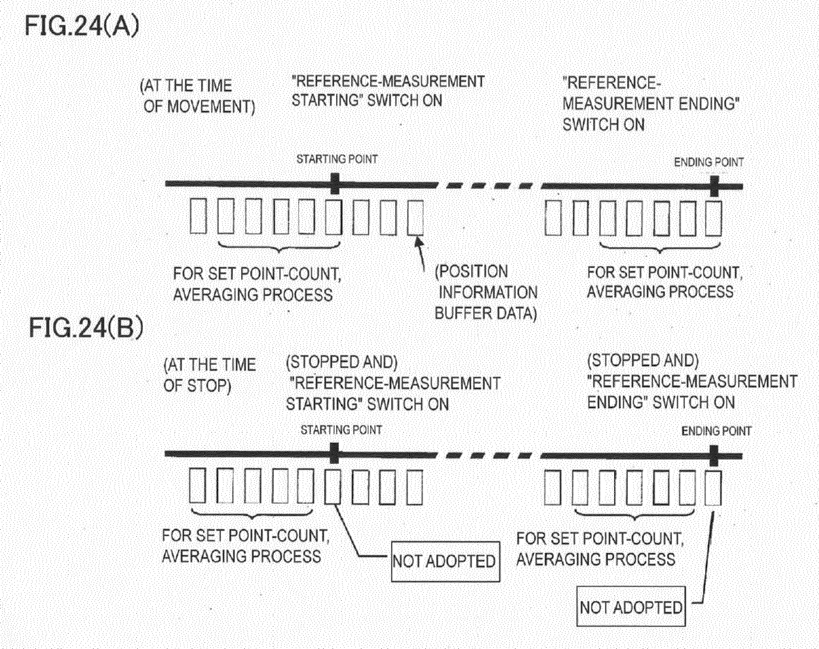

Moreover, regarding a method of performing calculation of the position information with high-accuracy, in a case where the current position P is specified from the longitude-and-latitude information read from the GPS signal and the line segment AB is determined from the aforesaid starting point A and the ending point B, descriptions are given based on FIG. 24. The position information which has been obtained from a conventional GPS dedicated set instrument, namely, the information communication terminal 90 in the present practical example is utilized as it is, but what is carried out is to improve accuracy by carrying out within a portable terminal 92 such as a tablet or the like the reprocess-reckoning and the position-correcting of this position information which has been obtained.

In FIG. 24, division is given for a case of the tractor movement-duration and a case of the stop-duration and, in the first place, in the movement-duration, if a touch operation of the aforesaid "reference-measurement starting" switch 103e is carried out, then the averaging process of the latitude, longitude information (the position information buffer data) for the predeterminedly set point-count (for example, the past 5 points) before this touch operation time-point is carried out and what is allowed to be the starting point A is gotten. Similarly, when a touch operation of the "reference-measurement ending" switch 103f is carried out, the averaging process of the longitude, latitude information for the predeterminedly set point-count (for example, the past 5 points) before this touch operation time-point is carried out and what is allowed to be the ending point B is gotten.

Moreover, at the time of the stop, for the position information when the tractor is stopping this is not adopted, and what is utilized is the information at the time of the movement until the time-point immediately before. For example, as shown in the figure, the configuration is being allowed to be such that the point information at the time of the stop is ignored and that the averaging process for the point-count immediately before set in advance is carried out, which is allowed to be the starting point and ending point. By allowing the configuration to be like this, position information with accuracy being high could be obtained.

And, based on the information of the machine-body, whether the movement-duration of the above-mentioned is taken or whether the stop-duration is taken is concluded. For example, the condition of the stop-duration conclusion is given with a case where the clutch pedal switch detects the clutch OFF, or alternatively a case where the machine-body vehicle-speed is equal to or less than a minute-speed (for example, 0.3 km/hour). Like this, by allowing the stop-duration condition to be a machine-body side condition, a precise conclusion can be given.

## Claims

1. A route setting device (92) of an agricultural working vehicle (1), comprising:
a reference-route setting unit (100a) which sets a straight-line reference-route (MS) of a machine-body of the agricultural working vehicle (1);
a target-route setting unit (100b) which sets a target-route (MLn, MRn...) parallel to the reference-route (MS); and
a displaying part (102) which displays the reference-route (MS) and the target-route (MLn, MRn...),
**characterized in that**
the route setting device (92) comprises a reference-measurement starting switch unit (103e) which accepts a setting operation of reference-measurement starting, and a reference-measurement ending switch unit (103f) which accepts a setting operation of reference-measurement ending,
the reference-route setting unit (100a) has a reference-measurement starting setting unit (100a1) which sets a starting point (A, An) of the reference-route (MS) based on the setting operation of the reference-measurement starting switch unit (103e), and a reference-measurement ending setting unit (100a2) which sets an ending point (B, Bn...) of the reference-route (MS) based on the setting operation of the reference-measurement ending switch unit (103f), and
the starting point (An) is renewed with every setting operation of the reference-measurement starting switch unit (103e).

2. The route setting device (92) of the agricultural working vehicle (1) according to claim 1, wherein
location-point information of the machine-body by a GPS is detected by a location-point information detecting unit (90),
the reference-measurement starting setting unit (100a1) sets the starting point (A, An) based on the location-point information which has been detected, and
the reference-measurement ending setting unit (100a2) sets the ending point (B, Bn...) based on the location-point information which has been detected.

3. The route setting device (92) of the agricultural working vehicle (1) according to claim 1, wherein
the ending point (Bn) is renewed with every setting operation of the reference-measurement ending switch unit (103f).

4. The route setting device (92) of the agricultural working vehicle (1) according to claim 1, comprising an assist starting switch unit (103a) which makes working data inputting of the machine-body start, wherein
the assist starting switch unit (103a) is also utilized as the reference-measurement starting switch unit (103e).

5. The route setting device (92) of the agricultural working vehicle (1) according to claim 1, wherein
on condition that there is not a setting operation of the reference-measurement ending switch unit (103f) thereafter based on a predetermined criterion, a turnaround point is set as the ending point (Bt) based on a turnaround judgement of the machine-body.

6. The route setting device (92) of the agricultural working vehicle (1) according to claim 1, wherein
a detour starting point is provisionally set as the ending point (Bk),
when it is judged based on a predetermined criterion that there is a setting operation of the reference-measurement ending switch unit (103f) thereafter, the ending point (Bk) which has been provisionally set is cancelled, and the ending point (Bc) is adopted corresponding to the setting operation, and
when it is judged based on the predetermined criterion that there is not a setting operation of the reference-measurement ending switch unit (103f) thereafter, the ending point (Bk) which has been provisionally set is adopted.

7. An agricultural working vehicle (1), comprising the route setting device (92) of the agricultural working vehicle (1) according to claim 1.

## Patentansprüche

1. Streckenplanungsgerät (92) eines landwirtschaftlichen Arbeitsfahrzeugs (1), umfassend:
eine Referenzstrecken-Einstellungseinheit (100a), die eine geradlinige Referenzstrecke (MS) eines Maschinenkörpers des Fahrzeugs (1) einstellt;
eine Zielstrecken-Einstellungseinheit (100b), die eine Zielstrecke (MLn, MRn...) einstellt, die parallel zur Referenzstrecke (MS) verläuft; und
eine Anzeigeeinrichtung (102), die die Referenzstrecke (MS) und die Zielstrecke (MLn, MRn...) anzeigt,
**dadurch gekennzeichnet, dass**
das Gerät (92) eine Schalteinrichtung (103e) zum Starten der Referenzmessungen umfasst, die einen Einstellungsvorgang zum Starten der Referenzmessung entgegennimmt, und eine Schalteinrichtung (103f), die einen Einstellungsvorgang zum Beenden der Referenzmessung entgegennimmt,
die Referenzstrecken-Einstellungseinheit (100a) eine Einstellungseinrichtung (100a1) zum Starten der Referenzmessung umfasst, die einen Ausgangspunkt (A, An) der Referenzstrecke (MS) aufgrund des Einstellungsvorgangs der Schalteinrichtung (103e) festsetzt, und eine Einstellungseinrichtung (100a2), die einen Endpunkt (B, Bn...) der Referenzstrecke (MS) aufgrund des Einstellungsvorgangs der Schalteinrichtung (103f) festsetzt, und der Ausgangspunkt (An) mit jedem Einstellungsvorgang der Schalteinrichtung (103e) neu festgesetzt wird.

2. Gerät (92) des landwirtschaftlichen Arbeitsfahrzeugs (1) nach Anspruch 1, wobei GPS-Standortdaten des Maschinenkörpers von einer Standortdaten-Erfassungseinheit (90) erfasst werden,
Die Einstellungseinrichtung (100a1) den Ausgangspunkt (A, An) aufgrund der erfassten Standortdaten festsetzt und die Einstellungseinrichtung (100a2) den Endpunkt (B, Bn...) aufgrund der erfassten Standortdaten festsetzt.

3. Gerät (92) des landwirtschaftlichen Arbeitsfahrzeugs (1) nach Anspruch 1, wobei der Endpunkt (Bn) mit jedem Einstellungsvorgang der Schalteinrichtung (103f) neu festgesetzt wird.

4. Great (92) des landwirtschaftlichen Arbeitsfahrzeugs (1) nach Anspruch 1, umfassend eine Starthilfe-Schalteinrichtung (103a) umfasst, die die Eingabe der Arbeitsdaten des Maschinenkörpers startet, wobei
die Starthilfe-Schalteinrichtung (103a) auch als Schalteinrichtung (103e) zum Starten der Referenzmessung verwendet wird.

5. Gerät (92) des landwirtschaftlichen Arbeitsfahrzeugs (1) nach Anspruch 1, wobei sofern danach kein Einstellungsvorgang der Schalteinrichtung (103f) aufgrund eines vorgegebenen Kriteriums vorliegt, ein Wendepunkt aufgrund eines Wendeurteils des Maschinenkörpers als Endpunkt (Bt) festgesetzt wird.

6. Gerät (92) des landwirtschaftlichen Arbeitsfahrzeugs (1) nach Anspruch 1, wobei ein Umweg-Ausgangspunkt vorläufig als Endpunkt (Bk) festgesetzt wird, wenn aufgrund eines vorgegebenen Kriteriums beurteilt wird, dass danach ein Einstellungsvorgang der Schalteinrichtung (103f) vorliegt, der vorläufig festgesetzte Endpunkt (Bk) verworfen wird und der Endpunkt (Bc), der dem Einstellungsvorgang entspricht, übernommen wird, und, wenn aufgrund des vorgegebenen Kriteriums beurteilt wird, dass danach kein Einstellungsvorgang der Schalteinrichtung (103f) vorliegt, der vorläufig festgesetzte Endpunkt (Bk) übernommen wird.

7. Landwirtschaftliches Arbeitsfahrzeug (1), umfassend das Gerät (92) des landwirtschaftlichen Arbeitsfahrzeugs (1) nach Anspruch 1.

## Revendications

1. Dispositif de définition d'itinéraire (92) d'un véhicule de travail agricole (1), comportant :
une unité de définition d'itinéraire de référence (100a) qui définit un itinéraire de référence rectiligne (MS) d'un corps de machine du véhicule de travail agricole (1) ;
une unité de définition d'itinéraire cible (100b) qui définit un itinéraire cible (MLn, MRn, ...) parallèle à l'itinéraire de référence (MS) ; et
une partie d'affichage (102) qui affiche l'itinéraire de référence (MS) et l'itinéraire cible (MLn, MRn, ...) ;
**caractérisé en ce que :**
le dispositif de définition d'itinéraire (92) comporte une unité de commutation de début de mesure de référence (103e) qui accepte une opération de définition de début de mesure de référence, et une unité de commutation de fin de mesure de référence (103f) qui accepte une opération de définition de fin de mesure de référence ;
l'unité de définition d'itinéraire de référence (100a) présente une unité de définition de début de mesure de référence (100a1) qui définit un point de départ (A, An) de l'itinéraire de référence (MS), sur la base de l'opération de définition de l'unité de commutation de début de mesure de référence (103e), et une unité de définition de fin de mesure de référence (100a2) qui définit un point d'arrivée (B, Bn,...) de l'itinéraire de référence (MS) sur la base de l'opération de définition de l'unité de commutation de fin de mesure de référence (103f) ; et
le point de départ (An) est renouvelé à chaque opération de définition de l'unité de commutation de début de mesure de référence (103e).

2. Dispositif de définition d'itinéraire (92) du véhicule de travail agricole (1) selon la revendication 1, dans lequel
des informations de point de localisation du corps de machine par un système GPS sont détectées par une unité de détection d'informations de point de localisation (90) ;
l'unité de définition de début de mesure de référence (100a1) définit le point de départ (A, An) sur la base des informations de point de localisation qui ont été détectées ; et
l'unité de définition de fin de mesure de référence (100a2) définit le point d'arrivée (B, Bn,...) sur la base des informations de point de localisation qui ont été détectées.

3. Dispositif de définition d'itinéraire (92) du véhicule de travail agricole (1) selon la revendication 1, dans lequel
le point d'arrivée (Bn) est renouvelé à chaque opération de définition de l'unité de commutation de fin de mesure de référence (103f).

4. Dispositif de définition d'itinéraire (92) du véhicule de travail agricole (1) selon la revendication 1, comprenant une unité de commutation de démarrage assisté (103a) qui occasionne le démarrage d'une saisie de données de fonctionnement du corps de machine, dans lequel
l'unité de commutation de démarrage assisté (103a) est également utilisée en tant que l'unité de commutation de début de mesure de référence (103e).

5. Dispositif de définition d'itinéraire (92) du véhicule de travail agricole (1) selon la revendication 1, dans lequel
dans la mesure où il n'existe pas d'opération de définition de l'unité de commutation de fin de mesure de référence (103f), subséquemment, sur la base d'un critère prédéterminé, un point de demi-tour est défini comme le point d'arrivée (Bt) sur la base d'une détermination de demi-tour du corps de machine.

6. Dispositif de définition d'itinéraire (92) du véhicule de travail agricole (1) selon la revendication 1, dans lequel
un point de départ de détour est provisoirement défini en tant que le point d'arrivée (Bk) ;
lorsqu'il est déterminé, sur la base d'un critère prédéterminé, qu'il existe une opération de définition de l'unité de commutation de fin de mesure de référence (103f), subséquemment, le point d'arrivée (Bk) qui a été provisoirement défini est annulé, et le point d'arrivée (Bc) est adopté en correspondance avec l'opération de définition ; et
lorsqu'il est déterminé, sur la base du critère prédéterminé, qu'il n'existe pas d'opération de définition de l'unité de commutation de fin de mesure de référence (103f), subséquemment, le point d'arrivée (Bk) qui a été provisoirement défini est adopté.

7. Véhicule de travail agricole (1), comportant le dispositif de définition d'itinéraire (92) du véhicule de travail agricole (1) selon la revendication 1.
